# FASCICULE DE BREVET EUROPEEN

(11) **EP 4 092 285 B1**
(45) Date de publication et mention de la délivrance du brevet: **28.10.2026**
(21) Numéro de dépôt: 22173593.9
(22) Date de dépôt: 16.05.2022
(51) Int. Cl.: F16D 13/68

(54) **MODULE DE TRANSMISSION DE COUPLE ET PROCÉDÉ POUR ASSEMBLER UN TEL MODULE DE TRANSMISSION DE COUPLE**
DREHMOMENTÜBERTRAGUNGSMODUL UND VERFAHREN ZUM ZUSAMMENBAUEN EINES SOLCHEN DREHMOMENTÜBERTRAGUNGSMODULS
TORQUE TRANSMISSION MODULE AND METHOD FOR ASSEMBLING SUCH A TORQUE TRANSMISSION MODULE

(30) Priorité: 18.05.2021 FR 2105203
(43) Date de publication de la demande: 23.11.2022
(73) Titulaire: VALEO EMBRAYAGES, 80009 Amiens (FR)
(72) Inventeur: VUAROQUEAUX, Guillaume, 80009 Amiens (FR); DOLE, Arnaud, 80009 Amiens (FR); THIBAUT, Francois, 80009 Amiens (FR); COUVILLERS, Didier, 80009 Amiens (FR)
(74) Mandataire: Valeo Powertrain Systems

(56) Documents cités:
- EP-A1- 3 757 414
- DE-A1- 102019 102 571
- FR-A1- 3 079 572
- FR-A1- 3 103 236

## Description

L'invention se rapporte au domaine des modules de transmission de couple pour engin de mobilité, notamment pour la fermeture d'un module triple embrayage disposé entre un moteur thermique et une boîte de vitesses, dans lequel une machine électrique tournante est disposée en parallèle ou coaxiale à l'axe principal de la transmission. L'invention concerne également un procédé d'assemblage d'un tel module de transmission de couple.

Il est connu de l'art antérieur, des modules à triple embrayage comportant un empilage axial de pièces tournantes ou fixes comprises entre un appui fixe coté boite de vitesse et un appui fixe côté dispositif d'amortissement ou moteur thermique. Les appuis fixes sont typiquement des parois latérales du carter de la boite de vitesses. Le module triple embrayage peut comprendre un embrayage de coupure ainsi qu'un double embrayage humide constitué d'un premier et un deuxième embrayage de type multidisques, aptes à coupler ou découpler sélectivement les moyens d'entrée de couple avec les premier et second arbres de sortie de couple. Chacun des embrayages multidisques, comportent des flasques liés en rotation à un porte-disque d'entrée formant le moyen d'entrée de couple et des disques de friction liés en rotation à des porte-disques de sortie. Chaque porte-disque comporte un moyeu connecté en rotation à l'arbre d'entrée de couple ou à l'un des arbres de sortie de couple.

Ces pièces sont fabriquées avec des cotes assurant leur assemblage et la réalisation de leurs fonctions une fois montés dans le véhicule. Elles sont agencées préalablement en sous-ensembles, de façon à respecter ces chaines de cotes et à obtenir des sous-ensembles assurant les fonctionnalités demandées. De telles pièces peuvent être maintenues: radialement par leurs formes propres ; axialement par les effort internes des pièces constitutives (ressorts) ; par des circlips et/ou des soudures, et lors de l'assemblage des sous-ensembles entre eux.

D'où certains problèmes de visibilité pour l'opérateur. Ces pièces nécessitent aussi des formes complexes.

En outre, les pièces présentes dans le module, comme les organes de roulement (en particulier les butées à aiguilles assemblées entre les portes-disques d'entrée et de sortie des embrayages) permettent aux autres pièces de tourner librement les unes par rapport aux autres. Elles doivent être maintenues radialement et axialement. En outre, la mise en place de nombreuses cales à ces endroits est nécessaire mais sources d'autres mesures et étapes de montage.

L'empilage de chacune de ces pièces doit être réalisé avec un jeu maitrisé (environ 0,2 à 0,3 mm), qui évite des déplacements trop importants de ces dernières lors des changements de sens de couple dans la boîte de vitesses. La précision d'assemblage est d'autant délicate, longue, couteuse, qu'elle présente de nombreux jeux au niveau des moyeux avant montage du module triple embrayage sur la boîte de vitesses. Un mauvais jeu de l'une de ces pièces suffit à interdire l'assemblage ultérieure ou à endommager celles-ci ou d'autres pièces lors de l'assemblage final, pour refermer ce triple embrayage. Même le maintien intermédiaire, par des pièces annexes, ne leur évite pas un déplacement radial/axial vers une position non voulue, l'effort d'assemblage n'existe donc pas pour autant, et ces pièces peuvent alors être dans une position intermédiaire entre toutes les positions possibles, notamment une position ne répondant pas aux exigences fonctionnelles avant montage. Les chaines de cotes ne sont pas garanties.

Dès lors, ces inconvénients imposent de nombreuses étapes de mesure de toutes les chaines de cotes issus d'un tel empilage. Soit un nombre très important de pièces empilées à mesurer, et un coût de fabrication élevé.

Il est fait référence aux documents DE 10 2019 102 571 A1 et EP 3 757 414 A1.

L'invention a notamment pour but d'apporter une solution simple, efficace et économique à ce problème. Un exemple de but de la présente invention est de simplifier les mesures de jeux d'un tel module de transmission de couple.

L'invention concerne un procédé d'assemblage selon la revendication 1 et un module de transmission de couple selon la revendication 7.

Dans ce but, l'invention propose, selon un premier aspect, un procédé d'assemblage d'un module de transmission de couple, notamment d'un triple embrayage, comprenant au moins les étapes suivantes :
a) Fournir un sous-ensemble d'embrayage préassemblé comprenant
   - un élément d'entrée de couple en rotation autour d'un axe X, apte à être couplé en rotation à un vilebrequin par exemple d'un moteur thermique,
   - un premier et un deuxième éléments de sortie de couple, aptes à être couplés respectivement en rotation à un premier et un deuxième arbres menés,
   - un embrayage d'entrée comprenant un ensemble multidisque empilé coopérant en partie avec un porte-disques d'entrée de couple, solidaire en rotation à l'élément d'entrée, et en partie avec un porte-disques de sortie de couple comprenant une surface d'appui axial,
   - un premier et un deuxième embrayages de sortie, supportés par un moyeu principal et coopérant en partie avec les éléments de sortie de couple, et
   - un organe de roulement présentant une face frontale arrière positionnée en appui sur l'élément d'entrée et une face frontale avant opposée;
b) Mesurer une première cote représentative d'une distance axiale entre la face frontale avant de l'organe de roulement et la surface d'appui axial du porte-disques de sortie de couple ;
c) Fournir un couvercle de fermeture apte à être solidaire en rotation d'une machine électrique, comprenant un fond et un bord cylindrique externe destiné à être monté sur la surface d'appui axial du porte-disques de sortie de couple ;
d) Mesurer une deuxième cote représentative d'une distance axiale entre le fond du couvercle de fermeture et l'extrémité externe du couvercle de fermeture;
e) Sélectionner un élément de calage configuré pour être monté dans le fond du couvercle de fermeture, l'élément de calage comportant une troisième cote dite épaisseur prédéfinie axialement entre :
   - une première face latérale arrière, configurée pour coopérer avec l'organe de roulement ou l'élément d'entrée, et
   - une deuxième face latérale avant, configurée pour coopérer avec le couvercle de fermeture ou l'organe de roulement ;
   l'élément de calage étant sélectionné en fonction des première et deuxième cotes de sorte à ajuster les positions du couvercle de fermeture et du sous-ensemble d'embrayage l'un par rapport à l'autre, en fonction de leurs tolérances de fabrication;
f) Positionner l'élément de calage
   dans le fond du couvercle de fermeture ou
   sur la face frontale avant de l'organe de roulement, ou
   entre la face frontale arrière de l'organe de roulement et l'élément d'entrée de couple,
      puis assembler le couvercle de fermeture au sous-ensemble d'embrayage en montant fixement le bord cylindrique externe sur la surface d'appui axial du porte-disques de sortie ; l'élément de calage étant configuré de telle sorte à ajuster la position interne finale du couvercle par rapport au sous-ensemble d'embrayage ; et
   la première face latérale de l'élément de calage étant en appui contre la face frontale avant de l'organe de roulement et la deuxième face latérale de l'élément de calage étant en appui et centré contre le fond du couvercle de fermeture ;
      ou
   la première face latérale de l'élément de calage étant en appui contre l'élément d'entrée de couple ; la deuxième face latérale de l'élément de calage étant en appui contre la face frontale arrière de l'organe de roulement et la face frontale avant de l'organe de roulement étant en appui contre le fond du couvercle de fermeture.

L'invention a également pour objet, selon un deuxième aspect, un procédé d'assemblage d'un module de transmission de couple, notamment d'un triple embrayage, comprenant au moins les étapes suivantes :
a) Fournir un sous-ensemble d'embrayage préassemblé comprenant
   - un élément d'entrée de couple en rotation autour d'un axe X, apte à être couplé en rotation à un vilebrequin par exemple d'un moteur thermique,
   - un premier et un deuxième éléments de sortie de couple, aptes à être couplés respectivement en rotation à un premier et un deuxième arbres menés,
   - un embrayage d'entrée comprenant un ensemble multidisque empilé coopérant en partie avec un porte-disques d'entrée de couple, solidaire en rotation à l'élément d'entrée, et en partie avec un porte-disques de sortie de couple comprenant une surface d'appui axial,
   - un premier et un deuxième embrayages de sortie, supportés par un moyeu principal et coopérant en partie avec les éléments de sortie de couple, et
   - un organe de roulement présentant une face frontale arrière positionnée en appui sur l'élément d'entrée et une face frontale avant opposée;
b) Mesurer une première cote représentative d'une distance axiale entre la face frontale avant de l'organe de roulement et la surface d'appui axial du porte-disques de sortie de couple ;
c) Fournir un couvercle de fermeture apte à être solidaire en rotation d'une machine électrique, comprenant un fond et un bord cylindrique externe destiné à être monté sur la surface d'appui axial du porte-disques de sortie de couple ;
d) Mesurer une deuxième cote représentative d'une distance axiale entre le fond du couvercle de fermeture et l'extrémité externe du couvercle de fermeture;
e) Sélectionner un élément de calage configuré pour être monté dans le fond du couvercle de fermeture, l'élément de calage comportant une troisième cote dite épaisseur prédéfinie axialement entre :
   - une première face latérale arrière, configurée pour coopérer avec l'organe de roulement, et
   - une deuxième face latérale avant, configurée pour coopérer avec le couvercle de fermeture ;
   l'élément de calage étant sélectionné en fonction des première et deuxième cotes de sorte à ajuster les positions du couvercle de fermeture et du sous-ensemble d'embrayage l'un par rapport à l'autre, en fonction de leurs tolérances de fabrication;
f) Positionner l'élément de calage
   dans le fond du couvercle de fermeture ou
   sur la face frontale avant de l'organe de roulement,
      puis assembler le couvercle de fermeture au sous-ensemble d'embrayage en montant fixement le bord cylindrique externe sur la surface d'appui axial du porte-disques de sortie ; l'élément de calage étant configuré de telle sorte à ajuster la position interne finale du couvercle par rapport au sous-ensemble d'embrayage ; et
   la première face latérale de l'élément de calage étant en appui contre la face frontale avant de l'organe de roulement et la deuxième face latérale de l'élément de calage étant en appui et centré contre le fond du couvercle de fermeture.

De manière avantageuse, le fond du couvercle peut être délimité par une portion de cylindre interne.

Lors du montage en aveugle selon l'étape f), l'élément de calage peut être positionné dans le fond du couvercle de fermeture, l'organe de roulement étant en appui contre l'élément d'entrée de couple ; Puis l'élément de calage est monté serré par la portion de cylindre interne lors de l'assemblage du couvercle de fermeture au sous-ensemble d'embrayage.

Alternativement, le fond du couvercle peut être délimité par une portion de cylindre interne. La portion de cylindre interne peut avoir une extrémité de forme conique, afin de centrer les pièces lors du montage en aveugle.

Lors du montage en aveugle selon l'étape f), l'élément de calage peut être positionné sur l'organe de roulement, l'organe de roulement étant en appui contre l'élément d'entrée de couple ; puis l'élément de calage est guidé et centré par la portion de cylindre interne ayant une extrémité de forme conique, lors de l'assemblage du couvercle de fermeture au sous-ensemble d'embrayage.

L'invention a également pour objet, selon un troisième aspect, un procédé d'assemblage d'un module de transmission de couple, notamment d'un triple embrayage, comprenant au moins les étapes suivantes :
a) Fournir un sous-ensemble d'embrayage préassemblé comprenant
   - un élément d'entrée de couple en rotation autour d'un axe X, apte à être couplé en rotation à un vilebrequin par exemple d'un moteur thermique,
   - un premier et un deuxième éléments de sortie de couple, aptes à être couplés respectivement en rotation à un premier et un deuxième arbres menés,
   - un embrayage d'entrée comprenant un ensemble multidisque empilé coopérant en partie avec un porte-disques d'entrée de couple, solidaire en rotation à l'élément d'entrée, et en partie avec un porte-disques de sortie de couple comprenant une surface d'appui axial,
   - un premier et un deuxième embrayages de sortie, supportés par un moyeu principal et coopérant en partie avec les éléments de sortie de couple, et
   - un organe de roulement présentant une face frontale arrière positionnée en appui sur l'élément d'entrée et une face frontale avant opposée;
b) Mesurer une première cote représentative d'une distance axiale entre la face frontale avant de l'organe de roulement et la surface d'appui axial du porte-disques de sortie de couple ;
c) Fournir un couvercle de fermeture apte à être solidaire en rotation d'une machine électrique, comprenant un fond et un bord cylindrique externe destiné à être monté sur la surface d'appui axial du porte-disques de sortie de couple ;
d) Mesurer une deuxième cote représentative d'une distance axiale entre le fond du couvercle de fermeture et l'extrémité externe du couvercle de fermeture;
e) Sélectionner un élément de calage configuré pour être monté dans le fond du couvercle de fermeture, l'élément de calage comportant une troisième cote dite épaisseur prédéfinie axialement entre :
   - une première face latérale arrière, configurée pour coopérer avec l'élément d'entrée, et
   - une deuxième face latérale avant, configurée pour coopérer avec l'organe de roulement ;
   l'élément de calage étant sélectionné en fonction des première et deuxième cotes de sorte à ajuster les positions du couvercle de fermeture et du sous-ensemble d'embrayage l'un par rapport à l'autre, en fonction de leurs tolérances de fabrication;
f) Positionner l'élément de calage
   entre la face frontale arrière de l'organe de roulement et l'élément d'entrée de couple,
      puis assembler le couvercle de fermeture au sous-ensemble d'embrayage en montant fixement le bord cylindrique externe sur la surface d'appui axial du porte-disques de sortie ; l'élément de calage étant configuré de telle sorte à ajuster la position interne finale du couvercle par rapport au sous-ensemble d'embrayage ; et
   la première face latérale de l'élément de calage étant en appui contre l'élément d'entrée de couple ; la deuxième face latérale de l'élément de calage étant en appui contre la face frontale arrière de l'organe de roulement et la face frontale avant de l'organe de roulement étant en appui contre le fond du couvercle de fermeture.

De manière avantageuse, le fond du couvercle peut être délimité par une portion de cylindre interne. La portion de cylindre interne peut avoir une extrémité de forme conique, afin de centrer les pièces lors du montage en aveugle.

Lors du montage en aveugle selon l'étape f), l'élément de calage peut être intercalé entre l'élément d'entrée de couple et l'organe de roulement ; Puis l'organe de roulement et l'élément de calage peuvent être guidés et centrés par la portion de cylindre interne ayant une extrémité de forme conique, lors de l'assemblage du couvercle de fermeture au sous-ensemble d'embrayage.

Selon les premier, deuxième et troisième aspects de l'invention, l'idée à la base de l'invention est de simplifier les étapes d'assemblage du module pour achever sa fermeture, en disposant désormais toutes ses pièces (excepté le couvercle de fermeture) sans avoir à contrôler leurs jeux ou leurs nombreuses chaines de cotes intermédiaires.

Après empilage des pièces du sous-ensemble d'embrayage, les cotes restantes à mesurer sont limités à celles du couvercle de fermeture, qui est dernier élément à être positionné et fixé solidairement sur le sous-ensemble d'embrayage. Ainsi, la chaine de cotes et la quantité de pièces à mesurer sont considérablement réduits.

En outre, l'espace laissé vacant par le roulement préassemblé est combler et réajuster artificiellement en ayant recours à un élément de calage monté simplement dans l'espace laissé vacant.

L'élément de calage comprend une épaisseur prédéfinie à sélectionner en fonction des côtes liées au couvercle.

Par sa configuration, l'élément de calage permet d'ajuster la position interne finale du couvercle espacée des autres pièces, par centrage et/ou avec un mouvement axial limité. Qu'il soit préalablement monté
- sur l'organe de roulement ou à l'intérieur du couvercle (premier et deuxième aspect) ou encore
- intercalé axialement entre l'élément d'entrée de couple et l'organe de roulement (premier et troisième aspect), l'élément de calage sera correctement positionné grâce à l'intervention du couvercle, notamment par coopération avec ce dernier, lors de la fixation de ce dernier au sous-ensemble d'embrayage, en particulier grâce à un ajustement serré et/ou à un centrage de l'élément de calage par rapport au couvercle.

Grâce à l'élément de calage, le jeu interne résultant est maitrisé, afin de satisfaire les tolérances dimensionnelles de l'ensemble des pièces liées à l'organe de roulement. Avec la sélection d'un élément de calage d'épaisseur prédéfini, il est possible d'utiliser un organe de roulement standard pour différents diamètres de couvercle de fermeture.

En outre, l'avantage d'un tel élément de calage est de diminuer le diamètre de l'organe de roulement et/ou du couvercle de fermeture, et par conséquent leur coût et poids. Ainsi, les étapes d'assemblages sont réduites. Les erreurs et coûts de fabrication sont réduits. Enfin, le coût économique global du module de transmission est réduit.

On entend par « élément de calage », toute pièce utilisée pour caler axialement et radialement un organe de roulement en comblant l'espace laissé vacant par ce dernier, par exemple au sein d'un volume libre qui lui est dévolu.

Par ailleurs, ce module de transmission selon l'invention présente un unique élément de calage. En effet, un seul élément de calage choisi parmi différentes épaisseurs prédéfinies peut suffire car il s'agit de combler le reste d'un volume libre créé par un ensemble de pièces afin de recevoir un organe de roulement.

On entend par un « ensemble multidisques », un ensemble comprenant au moins un disque de friction solidaire en rotation de l'un des porte-disque d'entrée et de sortie, au moins deux plateaux respectivement disposés de part et d'autre de chaque disque de friction, solidaires en rotation de l'autre des porte-disque d'entrée et de sortie et des garnitures de friction disposées entre les plateaux et un disque de friction, les embrayages décrivant une position débrayée et une position embrayée dans laquelle lesdits plateaux et le disque de friction pincent les garnitures de friction de manière à transmettre un couple entre un porte-disque d'entrée et un porte-disque de sortie.

On entend par « embrayage d'entrée », un embrayage de coupure. Au sens de la présente demande, l'embrayage de coupure est celui situé radialement à l'extérieur, c'est-à-dire le plus loin de l'axe X. Le deuxième embrayage étant celui situé radialement à l'intérieur, c'est-à-dire le plus proche de l'axe X dudit module.

On entend par « face frontale » de l'organe de roulement, une face qui définit axialement une extrémité dudit organe. L'organe de roulement permet de ne pas avoir d'hystérésis entre les pièces en rotation.

Ces premier, deuxième et troisième aspects de l'invention, peuvent présenter l'une ou l'autre des caractéristiques décrites ci-dessous, combinées entre elles ou prises indépendamment les unes des autres :
- L'élément d'entrée peut présenter une paroi d'appui circonférentielle et une portion de pré-centrage entourant la paroi d'appui, agencées pour recevoir la face frontale de l'organe de roulement ou de l'élément de calage;
- Selon un mode de réalisation, l'organe de roulement ou l'élément de calage peut être centré par une portion de pré-centrage formée par l'élément d'entrée ;
- La portion de pré-centrage peut être formée parmi un épaulement, une collerette et des ergots ;
- Selon l'invention le couvercle de fermeture et le porte-disques de sortie peuvent être assemblés bout à bout par soudure, en particulier du moment qu'il y a bien un contact axial entre le couvercle de fermeture et le porte-disque de sortie ;
- Par un exemple non revendiqué, le couvercle et le porte-disques de sortie peuvent être assemblés bout à bout par clipsage ;
- En variante, le couvercle et le porte-disques de sortie peuvent être assemblés bout à bout par soudure laser ;
- L'assemblage par liaison soudure limitant l'encombrement au niveau de l'extrémité libre du bord cylindrique ; Ces assemblages peuvent être compact radialement. En particulier, la soudure peut être localisée radialement à l'intérieur du porte-disques de sortie, et notamment à l'intérieur du logement, l'encombrement est alors réduit ;
- Selon un autre mode de réalisation, le couvercle de fermeture et le porte-disques de sortie peuvent être assemblés bout à bout par montage d'un anneau d'arrêt dans le porte-disques de sortie. Lors de l'assemblage du couvercle de fermeture au sous-ensemble d'embrayage, l'anneau d'arrêt peut être inséré dans le logement recevant le couvercle ;
- Le couvercle peut être arrêté par un anneau d'arrêt du porte-disques de sortie.
- L'épaisseur de l'anneau d'arrêt définit un quatrième cote. En d'autres termes, l'élément de calage peut être sélectionné en fonction de l'épaisseur définie par l'anneau d'arrêt, de sorte à ajuster les positions du couvercle de fermeture et du sous-ensemble d'embrayage l'un par rapport à l'autre, en fonction de leurs tolérances de fabrication ;
- Selon un mode de réalisation, l'on peut sélectionner l'élément de calage parmi une gamme d'élément de calage présentant plusieurs calibres, l'élément de calage de chaque calibre présentant une troisième cote différente de l'élément de calage d'un autre calibre. En particulier :
   Chaque élément de calage peut destiné à être monté avec un couvercle de fermeture ;
   Chaque élément de calage comportant une première face latérale arrière et une deuxième face latérale avant ;
   Chaque élément de calage peut présenter une troisième cote dite épaisseur prédéfinie représentative d'une distance axiale entre la première et la deuxième faces latérales ;
- Selon un mode de réalisation, chacun des éléments de calage comporte :
   - une première face latérale arrière, configurée pour coopérer avec l'organe de roulement ou l'élément d'entrée, et
   - une deuxième face latérale avant, configurée pour coopérer avec le couvercle de fermeture ou l'organe de roulement. En particulier:
      les première faces latérales arrières des éléments de calage étant de dimension radiale identiques, et
      les deuxième faces latérales arrières des éléments de calage étant de dimension radiale identiques.
   Ainsi, on choisit un tel élément de calage uniquement suivant son épaisseur variable dit troisième cote;
- Selon un mode de réalisation, la gamme des éléments de calage peut présenter entre deux et vingt calibres différents, et avantageusement entre trois et dix calibres différents. L'avantage d'un tel nombre de calibres d'éléments de calage est d'assurer une compensation précise et suffisante des tolérances de fabrication. Un large choix de sélection est possible, parmi un nombre d'éléments de calage ayant des troisièmes cotes différentes les unes des autres, ici compris entre trois et dix d'éléments de calage d'épaisseur prédéfinie différente ;
- Selon un mode de réalisation, les troisièmes côtes des éléments de calage des différents calibres s'étendent sur une plage telle que la différence entre la valeur maximale de la troisième cote et la valeur minimale de la troisième cote est comprise entre 0,5 et 5 mm, en particulier entre 0,5 et 2 mm, par exemple de l'ordre de 1 mm. L'avantage d'une telle plage de variation des troisièmes cotes s'avère suffisante pour compenser les tolérances de fabrication du couvercle de fermeture et du sous-ensemble d'embrayage;
- Dans un cas particulier, l'on peut sélectionner l'élément de calage qui présente la troisième cote la plus proche du résultat de la soustraction de la deuxième cote à la première cote ;
- Dans un autre cas particulier, l'on peut sélectionner l'élément de calage qui présente la troisième cote la plus proche du résultat de la soustraction de la deuxième cote et de la quatrième cote à la première cote ;
- Selon un mode de réalisation, lorsque le couvercle de fermeture est assemblé au sous-ensemble d'embrayage, l'élément de calage peut être configuré de telle sorte que la deuxième face latérale de l'élément de calage et la face frontale avant de l'organe de roulement se chevauche radialement, afin d'exercer un contact sur l'ensemble des pièces. On entend par « chevauchement radial » au moins deux pièces s'étendant sur une même hauteur radiale ;
L'invention a également pour objet, selon un quatrième aspect, un module de transmission de couple pour un engin de mobilité, comprenant :
- un sous-ensemble d'embrayage préassemblé, comprenant en outre :
   - un élément d'entrée de couple en rotation autour d'un axe X, apte à être couplé en rotation à un vilebrequin par exemple d'un moteur thermique,
   - un premier et un deuxième éléments de sortie de couple, aptes à être couplés respectivement en rotation à un premier et un deuxième arbres menés,
   - un embrayage d'entrée de type multidisque, solidaire en rotation à l'élément d'entrée, et
   - un premier et un deuxième embrayages de sortie, supportés par un moyeu principal et coopérant en partie avec les éléments de sortie de couple,
- un couvercle de fermeture apte à être solidaire en rotation d'une machine électrique, le couvercle de fermeture étant relié sélectivement à l'élément d'entrée par l'intermédiaire de l'embrayage d'entrée,
   le couvercle de fermeture délimitant axialement avec l'élément d'entrée un volume libre à l'intérieur duquel sont disposés un organe de roulement et un élément de calage dudit organe de roulement,
   l'élément de calage, d'épaisseur prédéfini dit troisième cote, étant *monté serré et*/*ou centré* sur le couvercle, de sorte à ajuster la position finale du couvercle de fermeture par rapport au sous-ensemble d'embrayage.

Ainsi, l'idée à la base de l'invention est de simplifier les étapes d'assemblage du module, notamment celles du montage du couvercle de fermeture (dernier élément à être positionné) sur le sous-ensemble d'embrayage.

Le montage en aveugle est simplifié. L'élément de calage peut être :
d'une part, être correctement positionné, grâce à l'intervention du couvercle, et
d'autre part, ajuster la position finale du couvercle par rapport aux autres pièces d'embrayage déjà assemblées.

Ainsi, la quantité de pièces à mesurer est réduite. On respecte les tolérances dimensionnelles de l'ensemble des pièces liées au volume libre. En outre, un tel élément de calage permet de diminuer le diamètre de l'organe de roulement et/ou du couvercle de fermeture, et par conséquent leur coût et poids.

Grâce à cet élément de calage d'épaisseur prédéfini, il est possible d'utiliser un organe de roulement standard pour différents diamètres de couvercle de fermeture. Ainsi, les étapes d'assemblages sont réduites. Les erreurs et coûts de fabrication sont réduits. Enfin, le coût économique global d'un tel module de transmission est réduit.

Ce module de transmission peut reprendre tout ou partie des caractéristiques mentionnées précédemment.

Tous les aspects de l'invention, peuvent présenter l'une ou l'autre des caractéristiques décrites ci-dessous, combinées entre elles ou prises indépendamment les unes des autres :
- Selon un premier mode de réalisation, l'élément de calage peut être positionné dans le fond du couvercle de fermeture. On réalise un montage simplifié, grâce un ajustement monté serré de l'élément de calage par rapport au couvercle, lorsque le couvercle de fermeture est assemblé au sous-ensemble d'embrayage ;
- Le fond du couvercle peut être délimité par une portion de cylindre interne. Lors de l'assemblage du couvercle de fermeture au sous-ensemble d'embrayage, l'élément de calage peut être monté serré par le fond du couvercle ;
- Selon un autre mode de réalisation, l'élément de calage peut être positionné sur la face frontale avant de l'organe de roulement. On réalise un montage simplifié, grâce au couvercle réalisant un ajustement par centrage de l'élément de calage, lorsque le couvercle de fermeture est assemblé au sous-ensemble d'embrayage ;
- Dans une telle situation, le fond du couvercle peut être délimité par une portion de cylindre interne ayant une extrémité de forme conique, l'élément de calage peut être guidé et centré par la portion de cylindre interne d'extrémité conique lors de l'assemblage du couvercle de fermeture au sous-ensemble d'embrayage ;
- Selon un mode de réalisation, l'organe de roulement peut être choisi parmi un palier axial et un palier de centrage, par exemple de type roulement à billes, conique, cylindrique, ou sphérique, ou butée à aiguille.
- A titre d'exemple, l'organe de roulement peut être un palier à roulement, tel qu'un roulement à billes ;
- Selon un mode de réalisation, le couvercle peut présenter un fond sur lequel l'élément de calage ou l'organe de roulement est en contact, notamment en appui axial. Le fond du couvercle délimite ainsi en partie le volume libre ;
- Selon un mode de réalisation, l'élément de calage et l'organe de roulement peuvent être empilés axialement l'un sur l'autre, autrement dit, ils peuvent être disposés les uns à la suite des autres suivant l'axe X ;
- Notamment, l'organe de roulement peut être intercalé axialement entre l'élément d'entrée et l'élément de calage, ou en variante, entre l'élément d'entrée et l'élément de calage. Un meilleur maintien axial est possible ;
- Notamment, l'organe de roulement peut être maintenu par des appuis opposés radialement et/ou diamétralement, respectivement formés par l'élément d'entrée et par l'élément de calage, ou bien par l'élément d'entrée et par l'élément de calage. Un meilleur maintien radial est possible ;
- Notamment, l'élément de calage et l'organe de roulement peuvent se chevaucher radialement, afin d'exercer un contact sur l'ensemble des deux pièces. Cet alignement axial réduit l'encombrement des pièces et simplifie leur disposition les unes sur les autres. Les exigences fonctionnelles sont garanties ;
- Selon un mode de réalisation, le fond peut être délimité par une portion de cylindre interne sur laquelle l'élément de calage ou l'organe de roulement est en contact, de sorte à le contenir dans le fond du couvercle. On peut assembler en aveugle l'élément de calage et l'organe de roulement, lors de la fermeture du module ;
- Dans une telle situation, le fond et la portion de cylindre interne peuvent délimiter en partie le volume libre, de sorte que l'organe de roulement n'est désormais plus contenu uniquement par l'élément d'entrée de couple. On réduit les contraintes de surépaisseur, de pertes de matières, et le poids global de l'ensemble des pièces délimitant le volume libre. L'encombrement d'un tel volume libre est également réduit ;
- Selon un mode de réalisation, l'élément de calage peut entourer la portion de cylindre interne du couvercle, de sorte à être pré-assembler sur ce dernier. On peut assembler en aveugle l'élément de calage, puisque ce dernier est retenu fixement sur le couvercle. Ceci facilite leur manipulation, leur transport et leur assemblage ;
- Une coopération de forme est possible, l'élément de calage peut être pré-monté serré sur la portion de cylindre interne du couvercle. Le jeu radial étant nul entre ces pièces, on supprime les risques de déplacement radial/axial, pour garantir le meilleur montage possible avec l'organe de roulement et avec le sous-ensemble d'embrayage ;
- L'épaisseur prédéfinie de l'élément de calage, dit troisième cote, peut être inférieure ou égale à l'épaisseur de l'organe de roulement, de préférence strictement inférieure à l'épaisseur de l'organe de roulement ;
- La dimension radiale de l'élément de calage peut être supérieure ou égale à celle de l'organe de roulement, de sorte à fournir la plus grande surface de contact possible entre les deux pièces ;
- Le diamètre intérieur de l'élément de calage peut être strictement inférieur ou égale au diamètre intérieur de l'organe de roulement. Alternativement ou en complément, le diamètre extérieur de l'élément de calage peut être strictement supérieur ou égale au diamètre extérieur de l'organe de roulement ;
- L'élément d'entrée peut délimiter une cavité destinée à recevoir en partie le couvercle de fermeture, et notamment agencée pour recevoir l'extrémité de la portion de cylindre interne. Une telle cavité réduit l'encombrement du module ;
- Avantageusement, l'extrémité de la portion de cylindre interne du couvercle peut avoir une forme complémentaire à celle de l'intérieur de la cavité de l'élément d'entrée, par exemple de formes coniques complémentaires ;
- La portion de cylindre interne du couvercle, et notamment son extrémité, peut être de forme conique. La forme en cône du couvercle sert à recentrer l'élément de calage lors de son assemblage en aveugle ;
- Selon un mode de réalisation, le volume libre peut être disposé radialement au-delà du moyeu principal. Ainsi, le moyeu principal et l'organe de roulement sont disposés à des hauteurs radiales différentes. Un tel décalage radial les exempte de chevauchement radial ou d'efforts axiaux, préjudiciables au jeu et à la tenue de l'ensemble des pièces ;
- Selon un mode de réalisation, l'embrayage d'entrée peut comprendre un porte-disques d'entrée de couple et un porte-disques de sortie de couple, chacun des portes-disques d'entrée et de sortie de couple comprenant un bord cylindrique adapté à recevoir l'ensemble multidisque de l'embrayage d'entrée ;
- Le porte-disques d'entrée de couple peut être fixé solidairement en rotation au premier élément d'entrée de couple ;
- Le porte-disques de sortie de couple peut être fixé solidairement en rotation au couvercle de fermeture ;
- Selon un mode de réalisation, l'embrayage d'entrée, le premier embrayage de sortie et le deuxième embrayage de sortie peuvent être empilés et alignés radialement, c'est-à-dire qu'il existe un axe fictif orthogonal à l'axe de rotation X qui passe par les trois embrayages. Les embrayages du triple embrayage peuvent être humides. Les embrayages peuvent être contenus dans au moins une chambre étanche remplie d'un fluide, notamment de l'huile. On entend par embrayage humide, un embrayage qui est adapté pour fonctionner dans un bain d'huile ;
- Selon un mode de réalisation, le porte-disques de sortie de couple peut être un porte-disques externe ;
- Le porte-disques de sortie de couple peut comprendre un logement interne, formé sur l'extrémité libre du porte-disques de sortie de couple, à l'intérieur duquel est monté solidairement le couvercle de fermeture ;
- Le logement peut être externe, c'est-à-dire ouvert radialement sur l'extérieur ;
- Le logement peut être interne, c'est-à-dire ouvert radialement sur l'intérieur ;
- Le logement du porte-disques de sortie, peut comprendre la surface d'appui axial et une portée cylindrique interne sur lesquelles le bord cylindrique du couvercle de fermeture est monté fixement ;
- La portée cylindrique peut être de forme continue. L'avantage d'un tel logement est d'être réalisé sur 360 degrés, ce qui assure une plus grande surface d'appui pour le montage du couvercle. Cette portée cylindrique peut être de forme complémentaire à celle de la surface d'appui du bord cylindrique du couvercle de fermeture ;
- Selon un mode de réalisation, la surface d'appui axial peut être réalisée sous une forme discontinue ;
- A titre d'exemple, la surface d'appui axial de forme discontinue du logement, peut être formée :
   - d'une paroi annulaire, de préférence continue tout autour de l'axe X ; et
   - de portions d'appui internes angulairement espacés;

On réduit ici au minimum le besoin de matière du logement, qui est désormais exempt d'une continuité de matière s'étendant tout autour de l'axe X, ou de contraintes de surépaisseur. Le logement peut s'étend sous une forme discontinue de matière tout autour de l'axe X, tout en conservant sa fonction de loger le couvercle. L'encombrement est limité, les pertes de matières sont réduites. Le poids global est aussi réduit ;
- A titre d'exemple, la surface d'appui axial discontinue, peut être réalisée partiellement:
   - par usinage de l'extrémité libre, de sorte à former la paroi annulaire ; et
   - par formage à froid de la cannelure, de sorte à former des portions d'appui internes espacés ;
- Le logement peut être réalisé au moins en partie enfoncements du porte-disques de sortie réalisant la cannelure, l'avantage est d'être formé en partie par l'espace délimité entre les enfoncements ;
- Les enfoncements peuvent décalés radialement de l'extrémité libre du bord cylindrique du porte-disques de sortie. Les enfoncements peuvent être disposés axialement entre le logement et le fond du porte-disques de sortie ;
- Les enfoncements peuvent être réalisés en retrait par rapport à l'extrémité libre du bord cylindrique. L'avantage est de former l'extrémité libre du bord cylindrique de sorte qu'elle soit la plus éloignée de l'axe X ;
- La surface d'appui axial discontinue formée en partie par l'espace délimité entre les enfoncements. En particulier, la surface d'appui axial discontinue est définie en partie par les extrémités desdits enfoncements. Les portions d'appui internes du logement peuvent alors être formées par les extrémités des enfoncements ;
- La portée cylindrique peut être réalisée par usinage de l'extrémité libre du porte-disques de sortie ;

L'invention a également pour objet, selon un autre aspect, une transmission de couple hybride pour un engin de mobilité, comprenant un module de transmission de couple précité et une machine électrique tournante, le couvercle de fermeture comprenant une zone de connexion électrique relié à la machine électrique de sorte que l'axe de rotation de la machine électrique soit décalé de l'axe X de rotation du module de transmission de couple. La machine électrique est alors dite « off-line ».

Notamment, le module de transmission de couple peut être connecté à un machine électrique 48V ou haute tension.

Avantageusement, la zone de connexion électrique du couvercle d'entrainement agencée pour recevoir un rotor de moteur électrique concentrique à l'axe X peut être décalée axialement par rapport au premier embrayage et au deuxième embrayage. Cette disposition permet notamment de ne pas avoir à disposer la machine électrique radialement au-delà des embrayages, ce qui serait négatif pour la compacité radiale. Cette disposition permet de positionner la machine électrique en fonction de l'espace disponible dans la chaine de traction du véhicule.

Cette disposition permet notamment de ne pas avoir à disposer la machine électrique axialement à la suite des embrayages, ce qui serait négatif pour la compacité axiale. Cette disposition permet notamment de ne pas avoir à disposer la machine électrique radialement au-delà des embrayages, ce qui serait négatif pour la compacité radiale.

Enfin, l'invention a également pour objet un véhicule automobile comprenant une transmission de couple hybride selon la présente invention.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées :
- [Fig. 1] est une coupe axiale d'un module de transmission, selon un premier mode de réalisation de l'invention ;
- [Fig. 2] est une vue éclatée du module de transmission illustrant de manière détaillée sa fermeture, selon la [Fig. 1] ;
- [Fig. 3] est une vue détaillée de l'organe de roulement et de l'élément de calage assemblés, selon la [Fig. 1] ;
- [Fig. 4] est une vue détaillée du porte-disques de sortie de l'embrayage d'entrée, selon la [Fig. 1] ;
- [Fig. 5] est une autre vue détaillée de l'assemblage du couvercle de fermeture sur le porte-disques de sortie de l'embrayage d'entrée, selon un exemple non revendiqué.
- [Fig. 6] est une autre vue détaillée de l'organe de roulement et de l'élément de calage assemblés, selon un troisième mode de réalisation de l'invention ;

Par « engin de mobilité », on entend les véhicules automobiles, les véhicules passagers, mais aussi les véhicules industriels, notamment les poids lourds, les véhicules de transport en commun ou les véhicules agricoles, mais également tout engin de transport permettant de faire passer d'un point à un autre un être vivant et/ou un objet.

Sauf indication contraire : « axialement » signifie « parallèlement à l'axe X de rotation du sous-ensemble d'embrayage préassemblé ou du module de transmission de couple » ; « radialement » signifie « selon un axe transversal coupant l'axe de rotation du sous-ensemble d'embrayage préassemblé ou du module de transmission de couple » ; « angulairement » ou « circonférentiellement » signifient « autour de l'axe X de rotation du sous-ensemble d'embrayage préassemblé ou du module de transmission de couple » ;
On utilisera à titre non limitatif et afin d'en faciliter la compréhension, les termes "intérieur / interne" ou "extérieur / externe" par rapport à l'axe X et suivant une orientation radiale, orthogonale à ladite orientation axiale ; et les termes "arrière" AR et "avant" AV pour définir la position relative d'un élément par rapport à un autre selon la direction axiale, un élément destiné à être placé proche du moteur thermique étant désigné par arrière et un élément destiné à être placé proche de la boîte de vitesses étant désigné par avant.

On entend par « cannelure interne » une série de dents internes s'étendant en direction de l'axe X, et délimitant entre elles des gorges externes. Les dents ou enfoncements sont réalisés depuis la périphérie externe de la tôle. On entend par « cannelure externe » une série de dents externes s'étendant en direction opposée à l'axe X, délimitant entre elles des gorges internes. Les dents ou enfoncements sont réalisés depuis la périphérie interne de la tôle.

Les cotes C1, C2, C3, C4 et les épaisseurs Ep1, Ep2, Ep3 sont mesurées selon l'axe X de rotation.

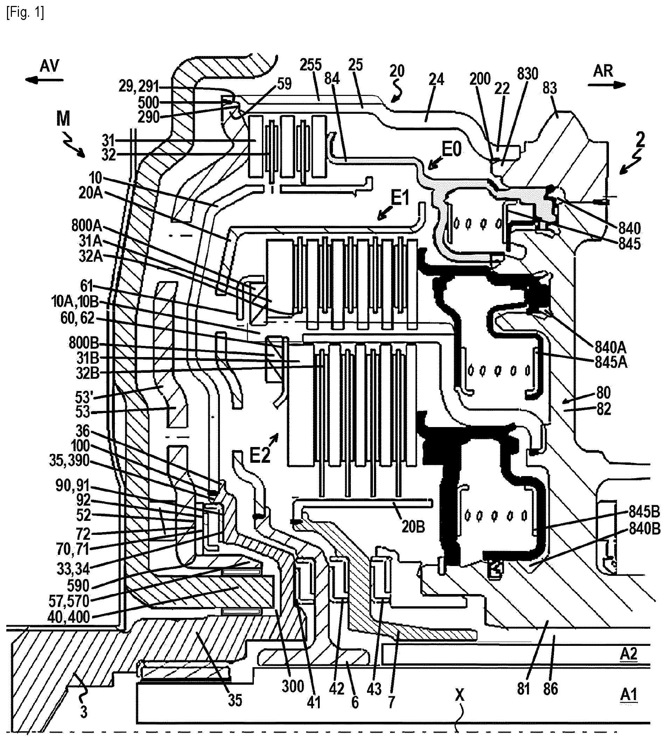

On a illustré sur les FIGURES 1 à 4 un premier mode de réalisation de l'invention. La [Fig. 1] illustre en coupe axiale un module M de transmission de couple assemblé, comprenant en outre un sous-ensemble d'embrayage 2 préassemblé et un couvercle 50 de fermeture, dernier élément à être assemblé pour achever l'assemblage d'un tel module M. Le sous-ensemble d'embrayage 2 constitue ici un triple embrayage. En variante non illustrée, le sous-ensemble d'embrayage peut être un simple embrayage, un double embrayage ou un embrayage type hybride, destiné à équiper des transmissions automatique, robotisée, hybride et/ou électrique d'un véhicule automobile.

En relation avec la FIGURE 1, on observe un tel module M de transmission de couple comprenant :
- un élément d'entrée de couple 3 en rotation autour d'un axe X, apte à être couplé en rotation à un vilebrequin d'un moteur thermique (non illustré mais situé à l'avant AV du module M de transmission de couple) ;
- un premier élément de sortie 6 de couple, apte à être couplé en rotation à un premier arbre A1 de sortie de couple, autrement dit d'entrée d'une boîte de vitesses situé à l'arrière AR du module M de transmission;
- un deuxième élément de sortie 7 de couple, apte à être couplé en rotation à un deuxième arbre A2 de sortie de couple, autrement dit d'entrée d'une boîte de vitesses situé à l'arrière AR du module M de transmission; et
- un moyeu d'alimentation 80 fluidique, notamment d'huile, dit moyeu principal.

Dans l'exemple illustré, le premier élément de sortie 6 est disposé en parallèle du deuxième élément de sortie 7 au sens de la transmission de couple. Chacun de ces éléments tourne autour d'un axe X de rotation du module M.

Les premiers et deuxièmes éléments de sortie 6, 7 comprennent respectivement un premier et un deuxième voile solidaire en rotation d'un premier et deuxième moyeu. Les premiers et deuxièmes moyeux comprennent des interfaces de sortie dont la périphérie interne est cannelée et apte à coopérer, respectivement avec un premier et un deuxième arbre de boite de vitesses. Notamment un dispositif d'amortisseur de torsion (non illustré) peut être positionné entre le vilebrequin du moteur thermique et l'élément d'entrée 3 de couple.

Le moyeu d'alimentation 80 d'huile est relié sélectivement à l'élément d'entrée 3 de couple par un embrayage d'entrée E0, au premier élément de sortie 6 de couple par un premier embrayage de sortie E1 et au deuxième élément de sortie 7 de couple par un deuxième embrayage de sortie E2.

En relation avec la FIGURE 1, nous allons maintenant décrire un module M de triple embrayage, pouvant être utilisé dans le cadre de la présente invention et comprenant un embrayage d'entrée E0, un premier embrayage de sortie E1 et un deuxième embrayage de sortie E2.

L'embrayage d'entrée E0, nommé également « embrayage de coupure E0 », comprend en outre :
- un porte-disque d'entrée 10 de couple solidaire en rotation du premier élément d'entrée 3 de couple,
- un porte-disque de sortie 20 de couple solidaire en rotation du moyeu d'alimentation 80, et
- un ensemble multidisque comprenant :
   - plusieurs disques 31 de friction, ici deux, solidaires en rotation d'un bord cylindrique 15 du porte-disque d'entrée 10, et
   - plusieurs plateaux 32 respectivement disposés de part et d'autre de chaque disque 31 de friction, solidaires en rotation d'un bord cylindrique 25 du porte-disque de sortie 20 et des garnitures de friction disposées entre les plateaux 32 et un disque 31 de friction, fixées de chaque côté des disques 31 de friction.

Par ailleurs, l'embrayage d'entrée E0 décrit une position débrayée et une position embrayée dans laquelle lesdits plateaux et le disque de friction pincent les garnitures de friction de manière à transmettre un couple entre le porte-disque d'entrée 10 et le porte-disque de sortie 20.

De manière analogue à l'embrayage d'entrée E0, le premier embrayage E1 de sortie et le deuxième embrayage E2 de sortie comprennent :
- un porte-disque d'entrée 10A, 10B solidaire en rotation du moyeu d'alimentation 80 ;
- un porte-disque de sortie 20A, 20B solidaire en rotation du premier élément de sortie 6 (pour l'embrayage de sortie E1) ou solidaire en rotation du deuxième élément de sortie 7 (pour l'embrayage de sortie E2) ; et
- un ensemble multidisque comprenant :
   - plusieurs disques 31A, 31B de friction, ici cinq disques 31A (pour l'embrayage E1) et quatre disques 31B (pour l'embrayage E2), solidaires en rotation du porte-disque de sortie 20A, 20B,
   - plusieurs plateaux 32A, 32B respectivement disposés de part et d'autre de chaque disque 31A, 31B de friction, solidaires en rotation du porte-disque d'entrée 10A, 10B et des garnitures de friction disposées entre les plateaux et un disque de friction, fixées de chaque côté des disques de friction.

Par ailleurs, les embrayages de sortie E1 et E2 décrivent une position débrayée et une position embrayée dans laquelle lesdits plateaux et le disque de friction pincent les garnitures de friction de manière à transmettre un couple entre le porte-disque d'entrée et le porte-disque de sortie correspondants. De manière commune aux trois embrayages E0, E1 et E2, les garnitures peuvent être fixées sur les disques de friction, notamment par collage, rivetage ou surmoulage. En variante, les garnitures sont fixées sur les plateaux.

De manière avantageuse, les portes-disques 10A, 10B d'entrées forment ici une seule et même pièce monobloc, réalisée d'un seul tenant, tel qu'illustrée sur la FIGURE 1. Chaque porte-disque 10, 10A, 10B, 20, 20A, 20B peut synchroniser en rotation l'ensemble des disques 31, 31A, 31B de friction ou l'ensemble des plateaux 32, 32A, 32B.

Dans l'exemple illustré, les plateaux 32, 32A, 32B peuvent être solidaires en rotation du porte-disque 10, 10A, 10B d'entrée et les disques 31, 31A, 31B de friction peuvent être solidaires du porte-disque 20, 20A, 20B de sortie. En variante, les plateaux peuvent être solidaires en rotation du porte-disque de sortie. Les disques peuvent être alors solidaires en rotation du porte-disque d'entrée.

Par ailleurs, les embrayages E0, E1, E2 sont de type humide et comportent entre deux et sept disques de friction, de préférence quatre disques 31, 31A, 31B de friction. De tels embrayages multidisques permettent de limiter la hauteur radiale de limiter l'étendue axiale. En particulier, les embrayages de sortie E1, E2 peuvent être agencés pour ne pas être simultanément dans la même configuration embrayée. En revanche, ils peuvent simultanément être configurés dans leur position débrayée.

Par ailleurs, le moyeu d'alimentation 80 alimente en huile l'embrayage d'entrée E0, le premier embrayage E1 de sortie et le deuxième embrayage E2 de sortie. Le moyeu d'alimentation 80 comprend en outre une portion cylindrique 81, un flasque 82 s'étendant radialement depuis la portion cylindrique, un support 83 de fermeture s'étendant radialement depuis le flasque 82 en direction de l'élément d'entrée 3 de couple.

Dans l'exemple considéré, le support 83 de fermeture du moyeu comprend une zone de connexion électrique relié à une machine électrique tournante de sorte que l'axe de rotation de la machine électrique soit décalé de l'axe X de rotation du module M de transmission de couple. Par ailleurs, la machine électrique peut être une machine synchrone à aimants permanents. La machine électrique est ainsi reliée sélectivement à l'élément d'entrée 3 de couple par l'embrayage d'entrée E0, au premier élément de sortie 6 de couple par le premier embrayage E1 de sortie et au deuxième élément de sortie de couple 7 par le deuxième embrayage E2 de sortie.

Dans l'exemple considéré, le moyeu d'alimentation 80 comprend en outre :
- une première cavité annulaire disposée sur le côté du flasque et agencé pour recevoir un piston d'actionnement du premier embrayage de sortie E1,
- une deuxième cavité annulaire disposé du même côté du flasque que la première cavité annulaire et agencé pour recevoir un piston d'actionnement du deuxième embrayage de sortie E2 ; et
- une troisième cavité annulaire disposé radialement au-delà des deux autres cavités annulaires et agencée pour recevoir un piston d'actionnement de l'embrayage d'entrée E0.

Le moyeu d'alimentation 80 comprend en outre un canal d'alimentation d'huile 86 traversant la portion cylindrique 81 et le flasque 53, 53' et débouchant dans l'une des cavités annulaires. Le canal d'alimentation d'huile 86 peut être réalisé par perçage de conduites successives au sein du moyeu d'alimentation d'huile, lesdites conduites étant débouchantes les unes dans les autres et agencées pour alimenter en fluide sous pression la chambre de commande des embrayages. Le fluide peut être de l'huile, par exemple de l'huile de boîte de vitesses.

Par ailleurs, le moyeu 80 est couplé en rotation à l'élément d'entrée 3 de couple. Lorsque l'élément d'entrée 3 de couple est couplé à un arbre menant A0 entrainé en rotation par le vilebrequin d'un moteur, tel que décrit précédemment, et que l'embrayage d'entrée E0 est fermé, alors le moyeu principal 80 est animé d'un mouvement de rotation analogue à celui de l'arbre moteur. Sur la FIGURE 1, l'embrayage d'entrée E0, le premier embrayage E1 de sortie et le deuxième embrayage E2 de sortie sont empilés et alignés radialement, c'est-à-dire qu'il existe un axe fictif orthogonal à l'axe de rotation X qui passe par les trois embrayages.

Par ailleurs, l'embrayage d'entrée E0 se trouve à l'extérieur par rapport au deux embrayages E1, E2 de sortie. Le deuxième embrayage E2 de sortie est disposé à l'intérieur par rapport au premier embrayage E1 de sortie.

De préférence, l'embrayage d'entrée E0, le premier embrayage E1 et le deuxième embrayage E2 de sortie (ci-après « les embrayages ») sont à l'état ouvert, encore dit « normalement ouvert », et sont actionnés sélectivement en fonctionnement par un dispositif de commande (non illustré) pour passer de l'état ouvert à l'état fermé.

Les embrayages E0, E1, E2 sont chacun commandés par un système d'actionnement 34, 34A, 34B agencé pour pouvoir configurer les embrayages dans une configuration quelconque comprise entre la configuration embrayée et la configuration débrayée. Pour commander sélectivement le changement d'état des embrayages, le dispositif de commande gère l'alimentation en huile.

Un tel dispositif de commande est raccordé au moyeu d'alimentation d'huile 80 qui comprend le réseau de passage de fluide 86. A chaque embrayage E0, E1, E2 est associé un système d'actionnement. Chaque système d'actionnement comprend en outre :
- une chambre de pression agencée pour recevoir un fluide pressurisé ;
- un piston 840, 840A, 840B mobile axialement à l'intérieur de la chambre de pression ; et
- une chambre d'équilibrage située à l'opposé de la chambre de pression par rapport au piston 840, 840A, 840B.

A chaque système d'actionnement est associé un élément de rappel élastique 845, 845A, 845B agencé pour générer un effort axial s'opposant au déplacement du piston 840, 840A, 840B correspondant pour embrayer l'embrayage E0, E1, E2 correspondant. L'élément de rappel élastique est une rondelle Belleville ou composé de ressorts hélicoïdaux, tels que la FIGURE 1. Ceci permet de rappeler automatiquement le piston en position débrayée, correspondant à un état ouvert de l'embrayage. Dans cette position, le piston libère axialement l'ensemble multidisque correspondant qui ne transmet alors plus de couple en direction du premier arbre mené A1 ou du deuxième arbre mené A2 d'une boite de vitesses (nommés aussi arbres d'entrée d'une boite de vitesse).

Par ailleurs, les chambres de pression des systèmes d'actionnement sont agencées pour recevoir un certain volume de fluide hydraulique sous pression afin de générer un effort axial sur un piston et de configurer ainsi l'embrayage correspondant dans l'une des configurations décrites précédemment.

La chambre de pression qui génère l'effort du piston est associée à une chambre d'équilibrage agencée pour recevoir un certain volume de fluide hydraulique. Le fluide, du type de lubrification ou de refroidissement est avantageusement acheminé par l'intermédiaire de conduits de circulation fluidiques basse pression (non illustré).

Le piston 840, 840A, 840B d'actionnement de chaque embrayage peut être contrôlé par un capteur interne de position venant contrôler l'embrayage ou par mesure de la pression hydraulique lors de la fermeture de l'embrayage ou par mesure du volume de fluide injecté ou par mesure d'une grandeur de déplacement lors de la fermeture de l'embrayage. Chaque piston est disposé axialement entre une chambre de pression et une chambre d'équilibrage.

Par ailleurs, les pistons 840, 840A, 840B prennent la forme d'une tôle ondulée et sont incurvés axialement vers l'avant AV ou vers l'arrière AR. Des appuis extérieurs s'étendent parallèlement à l'axe X longitudinal. Leur appui extérieur s'étend axialement, ici vers l'avant AV, pour presser l'ensemble multidisque contre un moyen de réaction 800, 800A, 800B associé de l'embrayage E0, E1, E2 correspondant.

À titre d'exemple non limitatif, les pistons 840, 840A, 840B peuvent être obtenus par emboutissage.

Dans les exemples illustrés, le moyen de réaction 800 de l'embrayage d'entrée E0 est formé sur le couvercle 50 de fermeture, ici au niveau de son extrémité externe 59. Ces derniers forment une seule et même pièce monobloc, s'étendant circonféntiellement de manière continue autour de l'axe X.

Par ailleurs, les moyens de réaction 800A, 800B des embrayages de sortie E1, E2 sont formés d'anneaux d'arrêt axial élastique, de forme fendue, chacun monté en partie au fond d'une gorge réalisée dans le porte-disque d'entrée 10, 10A, 10B correspondant. Par ailleurs, un organe de retenue 60 de type rondelle d'arrêt en tôle d'acier, s'étend radialement entre le premier embrayage et le deuxième embrayage, de sorte à être inséré et/ou à traverser au moins en partie dans les portes-disques 10A, 10B d'entrée.

Cet organe de retenue 60, ici en forme de S, monobloc et rigide, retient les anneaux d'arrêt axial formant les moyens de réaction 800A, 800B, en étant monté après ces derniers, pour empêcher qu'ils ne s'échappent de leur gorge. A titre d'exemple, l'organe de retenu 60 comprend une partie centrale annulaire 61 et une partie périphérique annulaire 62, sous forme de bras de liaison disposés radialement à l'extérieur de la partie centrale annulaire 61, pour retenir par exemple l'anneau d'arrêt axial du premier embrayage E1.

En outre, le module M peut être reçu sur un carter 40de boite de vitesses. Ce carter 40 est agencé pour envelopper au moins partiellement l'élément d'entrée 3 de couple, le premier et deuxième élément de sortie 6, 7 de couple, l'embrayage d'entrée E0 et les embrayages de sortie E1, E2.

Par ailleurs, le carter 40 de boite de vitesses est composé d'une portion axiale 40b reliant les deux parois latérales, dont l'une d'elle 40b (située à l'avant AV du module M) est illustré sur la FIGURE 1. A titre d'exemple, la paroi latérale 40b est ici composée d'une paroi radiale 400 de forme cylindrique, qui s'étend axialement autour de l'axe X. Cette paroi latérale 40b peut présenter une forme générale sensiblement en « L », la base du « L » étant située du côté de l'axe X de rotation. Le carter 40 peut être fixé au moteur à combustion interne ou au moteur de la machine électrique par l'intermédiaire de moyens de fixation, de type vis ou rivet.

Comme illustré sur les FIGURES 1 à 2, le module M comprend une série d'au moins trois paliers axiaux 41, 42, 43. Chaque palier axial présente deux faces frontales. Les paliers axiaux sont configurés pour supporter les efforts axiaux du triple embrayage 3. Les paliers axiaux 41, 42, 43 sont respectivement intercalé axialement entre l'élément d'entrée 3 de couple, le premier élément de sortie 6 de couple et le deuxième élément de sortie 7 de couple.

Dans l'exemple considéré, les paliers axiaux 41, 42, 43, se chevauchent radialement, ils sont de préférence disposés sur une même hauteur radiale. Les paliers 41, 42, 43, sont ici des paliers à roulement avec un premier et deuxième disque entre lesquels est disposée une pluralité de corps de roulement, de type butée à aiguilles.

De manière avantageuse, les positions des paliers axiaux 41, 42, 43 sont les suivantes :
- Le premier palier axial 41 est interposé entre l'élément d'entrée 3 et le premier élément de sortie 6 de couple afin de supporter les efforts axiaux de l'élément d'entrée 3 de couple malgré les vitesses de rotation différentes auxquelles peuvent respectivement tourner l'arbre d'entrée et le premier arbre A1 de transmission ;
- Le deuxième palier axial 42 est intercalé axialement entre l'élément de sortie 6 de couple définissant le porte-disques de sortie 20A de l'embrayage E1 et l'élément de sortie 7 de couple définissant le porte-disque de sortie 20B de l'embrayage E2 afin de pouvoir transmettre une charge axiale entre les deux porte-disques de sortie qui peuvent tourner à des vitesses différentes lorsque les premier et deuxième embrayages E1, E2 sont configurés dans une configuration différente ; et
- Le troisième palier axial 43 est intercalé axialement entre la portion cylindrique 81 du moyeu d'alimentation 80 en huile et l'élément de sortie 7 de couple, de préférence à l'extrémité avant AV dudit moyeu.

L'un des paliers axiaux, en particulier le palier axial 43, peut permettre le passage d'huile en provenance du moyeu d'alimentation 80 en direction du triple embrayage 3 et en particulier de la canalisation d'huile 86.

Comme illustré sur les FIGURES 1 à 6, le module M comprend en outre un organe de roulement dit roulement 90, qui est agencé dans un espace dit volume libre V0 défini par l'élément d'entrée 3 et le couvercle 50 de fermeture.

Par ailleurs, le couvercle 50 de fermeture présente :
- une portion de cylindre interne 57, proche de l'axe X, qui s'étend du côté arrière AR du module M,
- un extrémité radialement externe 59, éloigné de l'axe X et qui s'étend du côté arrière AR du module M, et
- un flasque 51 définissant un fond 52 du côté arrière AR du module M, qui relie les extrémités interne et externe.

Dans les exemples illustrés, le couvercle 50 est une seule et même pièce, formée d'un seul tenant, en particulier par découpage et emboutissage d'une seule tôle. Le fond 52 du couvercle définit un alésage ou un diamètre intérieur du couvercle. Plus le diamètre intérieur du couvercle est important, plus le fond peut être d'élongation radiale réduite.

Dans un mode de réalisation non illustré, le flasque et la portion de cylindre interne 57, ou bien le flasque et l'extrémité externe 59, peuvent être deux pièces distinctes du couvercle de fermeture solidaires en rotation.

Par ailleurs, le fond 52 du couvercle est une forme cylindrique de révolution et se développe axialement parallèlement à l'axe X. A titre d'exemple, la paroi d'appui 34 et le fond 52 sont en vis-à-vis axial et se développent parallèlement l'un à l'autre selon la direction radiale.

Par ailleurs, l'extrémité externe 59 du couvercle présente un bord cylindrique externe, ici de forme de révolution autour de l'axe X. Le fond 52 est délimité par la portion de cylindre interne 57, de sorte à délimiter en partie le volume libre V0. Dans ce premier mode, l'élément de calage 70 est supporté et centré sur la portion de cylindre interne 57.

De manière analogue, l'extrémité externe du couvercle 50 présente un bord cylindrique externe, ici de forme de révolution autour de l'axe X. Une telle extrémité radialement externe délimite la périphérie externe du flasque 51.

A titre d'exemple, son épaisseur est ici sensiblement constante sur l'ensemble du couvercle 50.

Par ailleurs, le couvercle 50 de fermeture est connecté ou assemblé sur le porte-disque de sortie 20 de l'embrayage d'entrée E0, afin de fermer de manière étanche le module M. Le couvercle 50 est lié sélectivement à l'élément d'entrée 3 par l'intermédiaire de l'embrayage d'entrée E0. En particulier, le couvercle 50 et le porte-disque de sortie 20 sont fixés ensemble bout à bout par soudure 500, de préférence par soudure de type laser.

Tout type de soudure est possible, notamment par apport de matière, par friction ou soudure laser. La soudure peut être de type continue ou discontinue autour de l'axe X. Dans un mode de réalisation non revendiqué ils peuvent être fixés ensemble par tout autre moyen d'assemblage, tel que par rivetage, par clipsage ou par liaison cannelée.

Dans un mode de réalisation non illustré, le couvercle de fermeture peut s'étendre radialement à l'intérieur et à l'extérieur du carter, par exemple en formant une cavité recevant la paroi radiale du carter de boite de vitesses. Dans l'exemple illustré, le couvercle 50 s'étendre radialement au-delà de la paroi latérale 40b du carter de boite.

Par ailleurs, le couvercle 50 de fermeture présente un faible encombrement axial et un fort encombrement radial, en fonction des composants préassemblés du triple embrayage 2 avec lesquels il coopère.

En particulier, l'extrémité interne 59 du couvercle est de dimension axiale LQ bien plus importante que les épaisseurs de l'élément de calage 70, de l'organe de roulement 90 et/ou de la dimension axiale volume libre V0.

La dimension axiale LQ de l'extrémité interne 59 est supérieur à 2 fois la somme des dimensions axiales de l'élément de calage 70 et de l'organe de roulement 90, de préférence supérieur ou égal à 2,5 fois cette somme.

Par ailleurs, le porte-disque de sortie 20 de l'embrayage d'entrée E0 présente une forme de révolution générale sensiblement en « L », la base du « L » étant située du côté le plus éloigné de l'axe X de rotation.

En outre, le porte-disque de sortie 20 est un porte-disques externe, qui comprend en outre :
- une extrémité radialement interne, définissant un alésage interne, qui est préassemblée sur le support 83 au moyen d'une soudure 200. En particulier, le support 83 peut comprendre un rebord d'appui 830, ici une excroissance usinée, pour centrer l'extrémité radialement interne ;
- un bord cylindrique 25 externe, ayant une cannelure 250 qui reçoit l'ensemble des plateaux 32, 32A, 32B ; et
- un logement 29 ici interne, formé sur l'extrémité libre du bord cylindrique 25 ;
Dans l'exemple considéré le couvercle 50 de fermeture est logé à l'intérieur du porte-disque de sortie 20, autrement dit dans le logement 29. De ce fait, le porte-disque de sortie 20 entoure ici le couvercle 50 de fermeture.

Le porte-disque de sortie 20 comprend un unique logement 29, réalisé par retrait de matière, ici par usinage interne de l'extrémité libre du bord cylindrique 25 externe. Par ailleurs, le logement 29 est ouvert radialement sur l'intérieur, de sorte à recevoir et centrer le couvercle 50 de fermeture, ici au niveau de son extrémité externe 59.

En variante non illustrée, le logement 29 peut être formé par un usinage externe de l'extrémité libre du bord cylindrique, de sorte à être ouvert radialement sur l'extérieur.

Sur les FIGURES 1 à 4, le logement 29 comprend :
- une surface d'appui axial 290, de forme continue ou discontinue autour de l'axe X, et
- une portée cylindrique 291 interne, issue de l'usinage de l'extrémité libre du bord cylindrique 25.

A titre d'exemple, la portée cylindrique 291 permet de centrer l'extrémité externe 59 du couvercle 50.

En outre, ce volume libre V0 est remarquable en ce qu'il reçoit cet organe de roulement 90 et un élément de calage 70. Ce roulement 90 est agencé dans ce volume libre V0, afin de bloquer axialement le triple embrayage 2 par rapport au couvercle, avant que ce dernier élément ne ferme le module M. On obtient dès lors un module M unitaire facilitant ses manipulations, transport et son assemblage futur, en particulier avec un carter de boite de vitesses 40.

Par ailleurs, l'élément d'entrée 3 présente une paroi d'appui 34 et une portion de pré-centrage 35 entourant la paroi d'appui 34 circonférentielle. Ces derniers délimitent en partie le volume libre V0 à l'intérieur duquel sont disposés un organe de roulement et un élément de calage dudit organe de roulement. Dès lors :
- Le volume libre V0 est défini axialement par une partie du triple embrayage 2, à savoir une paroi d'appui 34 circonférentielle de l'élément d'entrée 3, et par le couvercle 50 de fermeture, à savoir le fond 52 dudit couvercle ;
- Le volume libre V0 est défini radialement par une partie du triple embrayage 2, à savoir une portion de pré-centrage 35 de l'élément d'entrée 3, et par le couvercle 50 de fermeture, à savoir le fond 52 dudit couvercle.

Dans le premier mode, le roulement 90 est préassemblé sur l'élément d'entrée 3. En particulier, la portion de pré-centrage 35 entoure le roulement 90, de sorte à centrer ce dernier. La face frontale arrière 91 du roulement coopère ici intégralement avec la paroi d'appui 34 circonférentielle. Sur les FIGURES 1 à 3, la face frontale arrière 91 du roulement coopère avec la paroi d'appui circonférentielle de l'élément d'entrée.

A titre d'exemple, la portion de pré-centrage 35 peut être discontinue, formée parmi un série d'ergots.

Par ailleurs, le roulement 90 présente axialement de part et d'autre:
- une face frontale arrière 91 située à l'arrière du module M, montée en appui contre l'élément d'entrée 3, et
- une face frontale avant 92 opposée, située à l'avant du module M, en appui contre l'élément de calage 70.

Une épaisseur ER du roulement 90 est définie axialement entre les face frontales arrière 91 et avant 92.

En particulier, le roulement 90 comporte une bague externe 910 et une bague interne 920, chacune formant une piste de roulement respectivement interne et externe, délimitant ainsi un espace de roulement dans lequel sont logées des billes permettant la rotation relative entre la bague interne et la bague externe. La face frontale arrière 91 est ici formée par la bague externe 910. La face frontale avant 92 est ici formée par la bague interne 920.

Par ailleurs, les bagues interne 920 et externe 910 définissent la dimension radiale LR du roulement 90.

Par ailleurs, le roulement 90 est ici maintenu par des appuis opposés 390, 790 radialement et diamétralement.

Dans le premier mode, ces appuis opposés 390, 790 sont formés respectivement par l'élément d'entrée 3 et par l'élément de calage 70. Ainsi, le roulement peut être maintenu axialement et radialement de la manière suivante :
- L'élément d'entrée 3 réalise un appui axial 390 sur l'extérieur du roulement 90, ici sur la bague externe 910. On maintient ainsi le diamètre extérieur DR2 du roulement 90, et notamment la face frontale arrière 91 ;
- L'élément de calage 70 réalise un appui axial 790 sur l'intérieur de l'organe de roulement 90, ici sur la bague interne 920. On maintient ainsi le diamètre intérieur DR1 du roulement 90, et notamment la face frontale avant 92 ;

A titre d'exemple, la bague externe 910 peut être montée en force sur l'élément d'entrée 3 de couple.

Par ailleurs, l'élément d'entrée 3 comprend une gorge 33 à l'intérieur de laquelle le roulement 90 est logé. Lors du montage préassemblé du triple embrayage 2, la bague externe 910 du roulement 90 est préalablement :
- centré par la portion de pré-centrage 35, et
- en appui axial contre la paroi d'appui 34 circonférentielle.

Dans le premier mode, l'élément d'entrée, l'organe de roulement, l'élément de calage et le couvercle, se succèdent axialement (de l'arrière AR vers l'avant AV) de préférence selon cet ordre d'empilage énoncé.

En outre, le module M comprend au moins un élément de calage axial 70 disposé au contact
- d'une part, de l'une des faces frontales 91, 92 du roulement 90, et
- d'autre part, de l'un parmi le couvercle 50 de fermeture et de l'élément d'entrée 3 de couple.

Dans l'exemple illustré, l'élément de calage 70 et le roulement 90 se chevauchent radialement, afin d'exercer un contact sur l'ensemble des deux pièces. La bague interne 92 peut être portée par le couvercle 50 de fermeture, et notamment par l'intermédiaire d'un élément de calage axial 70. La dimension radiale LC de l'élément de calage 70 est ici supérieure à la dimension radiale LR du roulement 90. Une plus grande surface de contact est possible.

En outre, l'élément de calage 70 présente une forme générale de disque annulaire, telle qu'une rondelle ayant une ouverture centrale dite alésage. Cette ouverture centrale définit le diamètre intérieur DC1 de l'élément de calage 70. A titre d'exemple, l'élément de calage 70 peut être une pièce métallique, ou en variante plastique.

Lorsque le roulement 90 est disposé à l'intérieur du volume libre V0, un jeu est laissé vacant. De ce fait, l'élément de calage 70 est remarquable en ce qu'il comprend une épaisseur prédéfinie, dit troisième cote C3 à sélectionner, afin de combler le jeu laissé vacant par le roulement, pour arriver à une côte finale qui assure les fonctionnalités exigées du triple embrayage 2. En outre, l'élément de calage 70 permet d'éviter un contact entre ces pièces tournantes à des vitesses différentes. Les pièces préassemblées sont espacées de sorte de ne pas interférer avec le couvercle 50, selon une certaine marge de sécurité J0.

La troisième cote C3 est définie axialement entre les faces latérales 71, 72 opposées de l'élément de calage 70.

Les faces latérales 71, 72 opposées définissent la dimension radiale LC de l'élément de calage 70.

A titre d'exemple, la troisième cote C3 est ici strictement inférieure à l'épaisseur ER du roulement 90.

Dans le premier mode, l'élément de calage 70 présente axialement de part et d'autre:
- une première face latérale 71 située à l'arrière du module M, montée en appui contre l'organe de roulement 90, et
- une deuxième face latérale 72 opposée, située à l'avant du module M, montée en appui contre le couvercle 50.

Par ailleurs, l'élément d'entrée 3 délimite une cavité 300 recevant en partie le couvercle 50, et notamment l'extrémité 570 de sa portion de cylindre interne 57. L'intérieur de la cavité 300 et l'extrémité 570 sont ici de formes complémentaires. L'extrémité 570 de la portion de cylindre interne 57 est ici de forme conique, de sorte à guider et centrer l'élément de calage lors de l'assemblage en aveugle de ce dernier.

Avant la fermeture du module M, l'élément de calage 70 doit être disposé axialement entre le couvercle 50 et l'élément d'entré 2 de couple, autrement dit il est disposé à l'intérieur du volume libre V0.

De préférence, le volume libre V0, et notamment l'élément de calage 70 et le roulement 90, peut être :
- décalé axialement par rapport à la cavité 300 de l'élément d'entrée 3 de couple ; et/ou
- disposé radialement au-delà de la cavité 300 de l'élément d'entrée 3 de couple ; et/ou
- disposé radialement au-delà de la série des paliers axiaux 41, 42, 43.

De manière analogue, la gorge 33 et la cavité 300 sont décalées axialement l'une de l'autre. La paroi d'appui 34 est bordée à l'avant AV, par la portion de pré-centrage 35, et à l'arrière AR par la cavité 300 arrière. Une portion d'élongation est jointive de la paroi d'appui 34 et de la cavité 300. Ainsi, on réduit l'encombrement en deçà, en ménageant un espace libre recevant une pièce avoisinante, par exemple un carter 40 de boite ou un couvercle 50.

Le roulement 90 peut être exempte de chevauchement radial ou d'efforts axiaux d'autres paliers avoisinants, facilitant la tenue de l'ensemble des pièces et une marge de sécurité suffisante.

Par ailleurs, d'autres organes de roulement permettent de supporter radialement le triple embrayage 2.

Nous allons maintenant décrire plus en détails le porte-disque de sortie 20 d'axe X de rotation.

Dans l'exemple considéré, la surface d'appui axial 290 est de forme discontinue, présentant en outre :
- une paroi annulaire 2900 usinée lors de l'étape d'usinage, ici de forme continue autour de l'axe X ; et
- une série de portions d'appui 2905 internes, qui formées par l'extrémité des dents 255 de la cannelure 250.

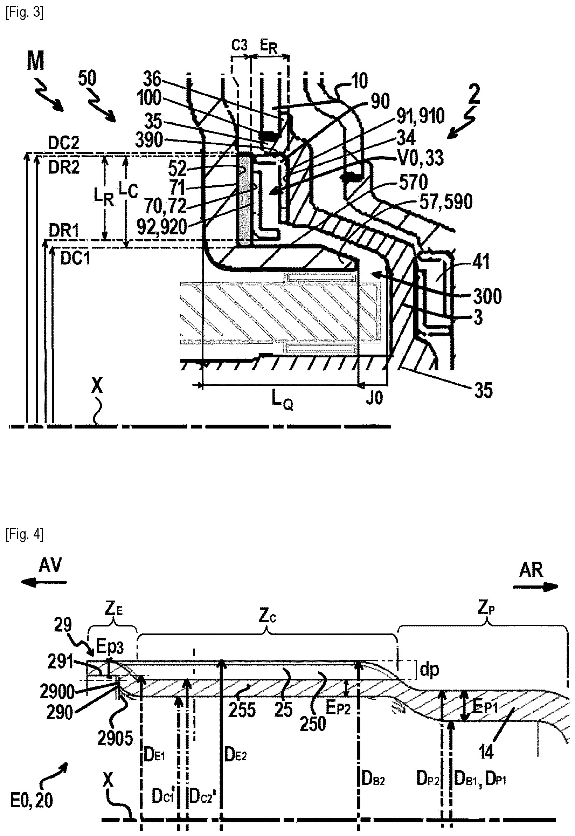

Tel qu'illustré sur la FIGURE 4, l'extrémité libre du bord cylindrique 25 est cintré (par matrice profilée ou presse) et usinée pour former le logement 29. Les portions d'appui axial forment ensemble ladite discontinuité de la surface d'appui axial 192. Les portions d'appui 2905 peuvent être espacées et réparties autour de l'axe X, selon une répartition régulière, ici équidistante. En outre, la paroi annulaire 2900 forme un des bords radiaux du logement 290. A titre d'exemple, la paroi annulaire 2900 définit ici à sa périphérie radialement interne un diamètre intérieur du logement 290. On peut distinguer les diamètres intérieurs de l'extrémité libre et du logement.

La portée cylindrique 291 et la paroi annulaire 2900 sont ici formés par usinage de l'épaisseur du bord cylindrique 25. En particulier, l'épaisseur Ep3 finale est définie radialement entre le diamètre extérieur de l'extrémité libre et le diamètre intérieur du logement. De ce fait, les dents 255 sont espacées radialement du logement 29. En les distinguant, on évite la détérioration de l'extrémité libre, lors du formage à froid, et celle des dents, lors de l'usinage de l'extrémité libre. La réalisation du logement 29 permet de réduire la perte de matière et la surépaisseur initiale de l'extrémité libre. Le poids global du porte-disques de sortie 20 est réduit.

Avantageusement, la surface d'appui axial 290 peut être discontinue et elle est formée :
- en partie par la paroi annulaire 2900 du logement 29 issue de l'usinage de l'extrémité libre ;
- en partie par l'extrémité des dents 255.

La cannelure 250 est formée d'une alternance de dents 255 internes et de gorges externes angulairement régulièrement réparties autour de l'axe X. Chaque gorge externe est délimitée entre deux dents 255 adjacentes.

Par ailleurs, la cannelure interne est réalisée par formage à froid d'une extension axiale déformée du bord cylindrique , dite « zone Z_{C} de formage », qui se caractérise par une série d'enfoncements espacés les uns des autres, c'est-à-dire répartis angulairement régulière autour de l'axe X.

En d'autres termes, la cannelure interne comprend une alternance d'espaces enfoncés et non enfoncés. Une série d'enfoncements est ainsi formée à froid depuis la périphérie externe du bord cylindrique 25, grâce à un outillage de formage à froid. On entend par « outillage de formage à froid » une série de rouleaux R profilés, se déplaçant parallèlement à l'axe X. En déformant à froid le bord cylindrique 25 lors de leur passage, ces rouleaux R réalisent depuis l'extérieur la cannelure interne.

Dans l'exemple considéré, la profondeur dp d'un enfoncement est supérieure à l'épaisseur Ep3 finale de l'extrémité libre du bord cylindrique. Par ailleurs, la cannelure interne est une zone centrale du bord cylindrique.

Par « zone centrale », on peut entendre une zone s'étendant sur environ 35% à 95% de la longueur axiale disponible Z_{B} du bord cylindrique. Le bord cylindrique 25 peut présenter en section, selon un plan passant par l'axe X, une succession de portions étagées, décalées radialement les unes des autres.

Ainsi le bord cylindrique 25 comprend trois extensions axiales :
- une première extension axiale d'épaisseur Ep1, dite portion intermédiaire 24, reliée au fond 12 du porte-disque ;
- une deuxième extension axiale d'épaisseur Ep2, formant la cannelure interne reliée à la portion intermédiaire 24 ;
- une troisième extension axiale d'épaisseur Ep3, formant le logement 29, et qui est reliée à la cannelure interne ;

Sur la FIGURE 4, la cannelure interne s'étend radialement à l'extérieur de la portion intermédiaire 24. En outre :
- La portion intermédiaire 24 s'étend radialement entre un diamètre intérieur DP1 et un diamètre extérieur DP2, et ils délimitent entre eux l'épaisseur Ep1 de la portion intermédiaire 22. En outre, la portion intermédiaire 14 s'étend axialement depuis l'alésage selon une zone ZP axiale. A titre d'exemple, l'épaisseur Ep2 de la cannelure interne est ici inférieure à l'épaisseur Ep1 de la portion intermédiaire 24.
- La cannelure 250 interne s'étend radialement entre un diamètre intérieur DC1' et un diamètre extérieur DC2'. Le diamètre intérieur DC1' de la cannelure est définie sur la crête des dents internes. Le diamètre extérieur DC2' de la cannelure est définie sur le fond des gorges externes. Notamment, ces enfoncements s'étendent selon une profondeur dp, définie entre les diamètres intérieur DC1' et extérieur DC2' de la cannelure.
- On peut définir l'extrémité libre du bord cylindrique 25 en bout du porte-disques de sortie 20. L'extrémité libre s'étend sous une forme cylindrique, de centre l'axe X et exemptée d'enfoncement. Cette extrémité libre s'étend axialement selon une zone libre ZE, notamment sous la forme d'une collerette continue autour de l'axe X.
- La zone libre ZE de l'extrémité libre est définie depuis la limite des enfoncements. Par ailleurs, elle peut être définie par un profil d'extrémité des enfoncements. On dimensionne la zone libre ZE de l'extrémité libre de sorte à ce qu'elle soit suffisante pour entourer la périphérie radialement externe du couvercle 50, ici son flasque 51. La zone libre ZE de l'extrémité libre peut être inférieur ou égale à 9% de la zone ZC des enfoncements. En variante, elle peut être supérieur ou égale à 17% de la zone ZC axiale des enfoncements.
- La cannelure interne 250, et notamment les dents 255, sont décalées axialement et radialement de l'extrémité libre. Ainsi, la cannelure interne 250 est formée en retrait par rapport à l'extrémité libre du bord cylindrique 25.
   Ainsi, l'extrémité libre est décalée radialement des dents 255 de la cannelure 250.
   De ce fait, les dents 255 s'étendent radialement entre l'extrémité libre et l'alésage du porte-disques de sortie 20.
   Ainsi, l'extrémité libre s'étend radialement entre un diamètre intérieur DE1 et un diamètre extérieur DE2 ;
- La forme finale de l'extrémité libre est formée en partie par cintrage et usinage, pour leur mise en forme finale ;
- Le diamètre extérieur DB2 du bord cylindrique 25 est égale au diamètre extérieur DE2 de l'extrémité libre.
- Le diamètre intérieur DB1 du bord cylindrique 25est supérieur au diamètre extérieur DC2 de la cannelure 250 ;
- Le diamètre extérieur DC2' de la cannelure 250 est supérieur au diamètre intérieur DL1 du logement 29 ;
- Le diamètre intérieur DC1' de la cannelure est supérieur au diamètre extérieur DP2 de la portion intermédiaire 24 ;
- Le diamètre intérieur DL1 du logement 29 est supérieur au diamètre extérieur DP2 de la portion intermédiaire 24 ;

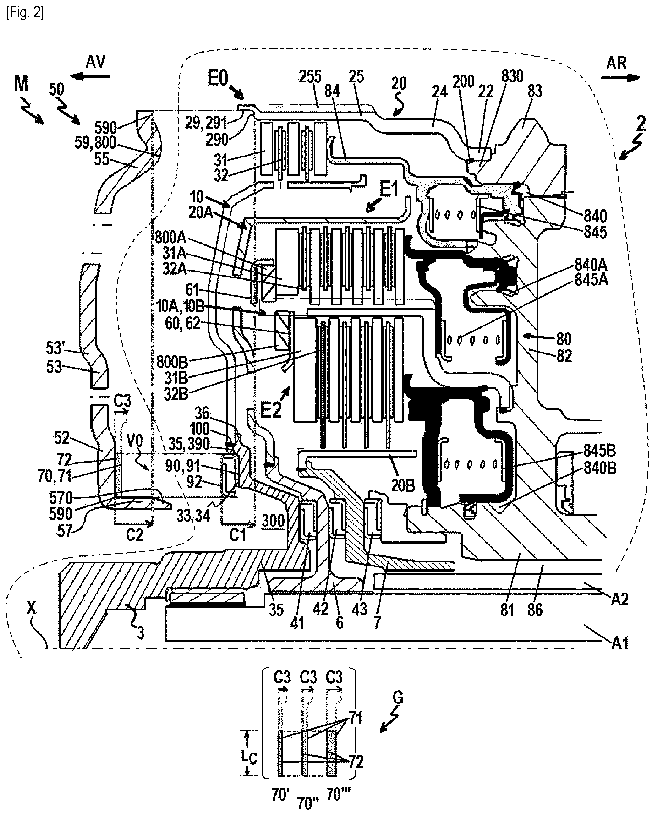

On décrit maintenant plus en détails le procédé d'assemblage dite de fermeture d'un module M, illustré en FIGURE 2, avec le montage du couvercle 50 de fermeture sur le sous-ensemble préassemblé dit triple embrayage 2 :

Selon une première étape a), on fournir un triple embrayage 2 préalablement assemblé, comprenant en outre :
- un élément d'entrée 3 de couple en rotation autour d'un axe X, apte à être couplé en rotation à un vilebrequin par exemple d'un moteur thermique,
- un premier et un deuxième éléments de sortie 6, 7 de couple, aptes à être couplés respectivement en rotation à un premier et un deuxième arbres menés A1, A2,
- un embrayage d'entrée E0 comprenant un ensemble multidisque empilé coopérant en partie avec un porte-disques d'entrée 10 de couple, solidaire en rotation à l'élément d'entrée 3, et en partie avec un porte-disques de sortie 20 de couple comprenant une surface d'appui axial 290,
- un premier et un deuxième embrayages de sortie E1, E2 supportés par un moyeu principal 80 et coopérant en partie avec les éléments de sortie 6, 7 de couple, et
- un roulement 90 préalablement positionné en appui sur l'élément d'entrée 3, le roulement 90 présentant une face frontale arrière 91 et une face frontale avant 92 opposée.

Selon une deuxième étape b), on mesure une première cote C1 qui est représentative d'une distance axiale entre la face frontale avant 92 du roulement 90 et la surface d'appui axial 290 du porte-disques de sortie 20.

Selon une troisième étape c), on fournit un couvercle 50 de fermeture, comprenant un fond 52 et un bord cylindrique 59 externe. Avantageusement, le couvercle 50 de fermeture est apte à être solidaire en rotation d'une machine électrique. En outre, le bord cylindrique 59 externe comporte une périphérie externe qui est destinée à être montée sur la surface d'appui axial 290 du porte-disques de sortie 20.

Selon une quatrième étape d), on mesure une deuxième cote C2 qui est représentative d'une distance axiale entre le fond 52 du couvercle et l'extrémité externe 59 du couvercle 50 de fermeture.

Selon une cinquième étape e), on sélectionne un élément de calage 70 qui est configuré pour être monté dans le fond 52 du couvercle 50, l'élément de calage 70 comportant une troisième cote C3 dite épaisseur prédéfinie.

Notamment, la troisième cote C3 est représentative d'une distance axiale entre une première face latérale 71 arrière et une deuxième face latérale 72 avant. Selon cette étape (e), l'élément de calage 70 est sélectionné en fonction des première et deuxième cotes C1, C2 de sorte à ajuster les positions du couvercle 50 de fermeture et du triple embrayage 2, en fonction de leurs tolérances de fabrication.

Notamment, l'élément de calage 70 est sélectionné parmi une gamme G d'éléments de calage 70, 70', 70" présentant plusieurs calibres, ici d'épaisseurs prédéfinies différentes.

Dans ce premier mode, la gamme des éléments de calage présente quatre calibres différents, autrement dit, quatre éléments de calage différents 70, 70', 70", 70‴. La différence entre la valeur maximale de la troisième cote C3 et la valeur minimale de la troisième cote C3 peut être comprise entre 0,5 et 2 mm.

Par ailleurs, chaque élément de calage 70, 70', 70", 70"' présente une troisième cote C3 représentative d'une distance axiale entre la première et la deuxième faces latérales 71, 72, l'élément de calage 70, 70', 70", 70"' de chaque calibre présentant une troisième cote C3 différente de l'élément de calage d'un autre calibre.

Dans ce premier mode, la première face latérale 71 est configurée pour coopérer avec le roulement 90. La deuxième face latérale 72 est configurée pour coopérer avec le couvercle 50. En particulier, chaque élément de calage 70, 70', 70" est destiné à être monté sur un couvercle 50 de fermeture.

En particulier dans ce premier mode, les éléments de calage 70, 70', 70", 70"' comporte chacun :
- une première face latérale 71 arrière, de préférence de dimension identique ;
- une deuxième face latérale 72 avant, de préférence de dimension identique ;

En particulier selon une sixième étape f),
- On positionne tout d'abord l'élément de calage 70, par exemple sur la face frontale avant 92 de du roulement 90. L'élément de calage est ici monté ou préassemblé sur le couvercle, ce qui simplifier son montage, ainsi que les manipulation et transport desdites pièces par l'opérateur.
- On assemble ensuite le couvercle 50 de fermeture au triple embrayage 2, en montant fixement le bord cylindrique 59 sur la surface d'appui axial 290 du porte-disques de sortie 20, ici par liaison soudée.
- Ainsi, l'élément de calage 70 est centré par rapport au couvercle 50. Cette configuration assure un positionnement correct de l'élément de calage, et notamment au sein du volume libre V0, ceci afin d'ajuster la position finale du couvercle 50 par rapport au triple embrayage 2.

Selon l'étape f), on peut réaliser la fixation du couvercle 50 sur l'embrayage d'entrée E0 de la manière suivante :
- On met en appui le couvercle 50 sur le porte-disques de sortie 20, et notamment à l'intérieur de ce dernier ;
- En particulier, le couvercle 50 est logé dans un logement 29 interne du porte-disques de sortie 20 ; et
- On fixe ensuite bout à bout le couvercle 50 et le bord cylindrique 25 du porte-disques de sortie 20, ici par soudure 500 de type laser. La soudure 500 est localisée radialement à l'intérieur du logement 29 ;
- La soudure 500 peut être continue autour de l'axe X, réalisée en partie sur la paroi annulaire 2900 du logement 29.

Dans ce premier mode, lorsque le couvercle de fermeture est assemblé au sous-ensemble d'embrayage :
- L'élément de calage 70 est directement intercalé entre le fond 52 du couvercle et la face frontale 91 du roulement ;
- Le couvercle est directement en appui et fixé sur la surface d'appui 290 du porte-disques de sortie 20 ;
- La face frontale arrière 91 du roulement 90 est bloqué axialement contre l'élément d'entrée 3, ici contre la paroi d'appui 34. En particulier, la face frontale arrière 91 peut coopérer intégralement sur la paroi d'appui 34 ;
- La première face latérale 71 est en appui axial contre la face frontale avant 92 du roulement 90. En particulier, la première face latérale 71 peut coopérer intégralement sur la face frontale avant 92 du roulement;
- La deuxième face latérale 72 avant de l'élément de calage 70 est en appui axial contre le fond 52 du couvercle 50. En particulier, la deuxième face latérale 72 peut coopérer intégralement sur le fond 52 du couvercle;

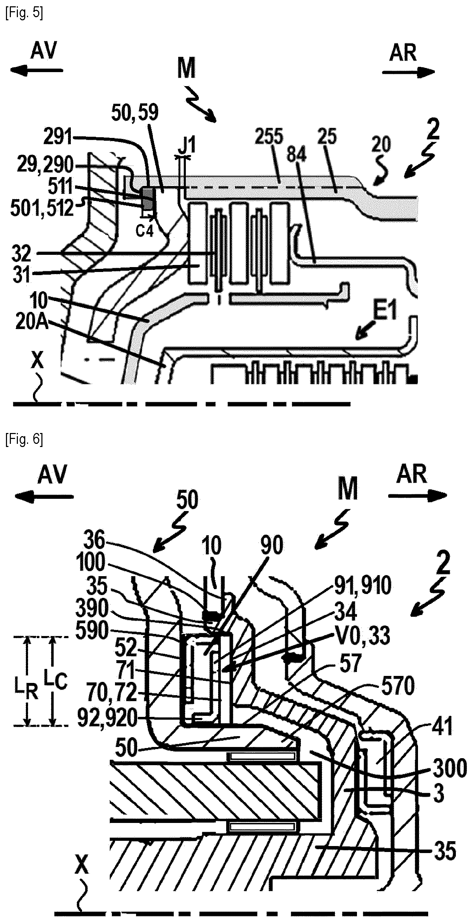

On a décrit sur la FIGURE 5, un exemple non revendiqué sensiblement similaire au premier mode de réalisation, à l'exception du fait que l'assemblage du couvercle 50 de fermeture sur le triple embrayage 2 est réalisé par un organe de retenue, selon la sixième étape f. Ainsi, le couvercle 50 est exempte de soudure.

Selon ce deuxième mode, l'organe de retenue est ici un anneau d'arrêt 501. En particulier sur la FIGURE 5 :
- Le couvercle 50 et le porte-disques de sortie sont assemblés bout à bout par montage d'un anneau d'arrêt 501 ;
- La forme de l'anneau d'arrêt 501 peut être ouverte, telle qu'un anneau élastique de type fendu ;
- Le couvercle 50 et l'anneau d'arrêt 501 sont logés dans le même logement 29 ;
- L'anneau d'arrêt 501 ne comble pas entièrement l'espace libre restant du logement 29 après le montage du couvercle 50, un jeu J1 de montage y résulte pour le montage et le démontage desdites pièces assemblées;
- L'anneau d'arrêt 501 est intercalé axialement entre l'extrémité libre du bord cylindrique 25 du porte-disques de sortie 20 et le bord cylindrique 59 du couvercle 50 ;
- On insère du côté avant AV l'anneau d'arrêt 501 dans le logement 29 logeant déjà le couvercle 50. Ainsi, la surface d'appui 290 du porte-disques de sortie reçoit l'anneau d'arrêt 501 ;
- Le contact axial entre le couvercle 50 et le porte-disque se fait ici indirectement par l'anneau d'arrêt 501, pour retenir le couvercle 50 à l'intérieur du porte-disques de sortie 20, du côté arrière AR du module M ;
- L'élément de calage, et notamment sa troisième côte C3, peut être sélectionné en fonction des première et deuxième cotes C1, C2, et d'une quatrième cote C4 définie par l'épaisseur de l'anneau d'arrêt 501 ;

Ainsi, l'épaisseur de l'anneau d'arrêt 501 présente une quatrième cote C4 qui rentre dans la chaine de cotes à mesurer, afin d'ajuster correctement les positions du couvercle 50 et du triple d'embrayage 2.

Les étapes additionnelles du procédé d'assemblage du module M, selon la FIGURE 5, sont les suivantes :
- Selon une étape additionnelle c.bis) :
   - On fournit un anneau d'arrêt 501 configuré pour assembler fixement le couvercle 50 sur le porte-disques de sortie 20. Une épaisseur est définie entre ses faces latérales 511, 512 avant et arrière, de l'anneau d'arrêt 501.
   - On mesure une quatrième cote C4 de l'anneau d'arrêt 501 représentative d'une distance axiale entre une première face latérale 511 arrière de l'anneau d'arrêt 501, configurée pour coopérer avec le bord cylindrique 59 externe ; et une deuxième face latérale 512 avant de l'anneau d'arrêt 501, configurée pour coopérer avec la surface d'appui axial 290 du porte-disques de sortie 20.
- Selon la cinquième étape e), on sélectionne un élément de calage 70, et notamment sa troisième cote C3, en fonction de la première cote C1, de la deuxième cote C2 et de la quatrième cote C4, de sorte à ajuster les positions du couvercle 50 de fermeture et du triple embrayage 2, en fonction de leurs tolérances de fabrication.

On a décrit sur la FIGURE 6, un troisième mode de réalisation de l'invention sensiblement similaire au premier mode de réalisation, à l'exception du fait que l'élément d'entrée 3, l'élément de calage 70, le roulement 90 et le couvercle 50, se succèdent axialement (de l'arrière AR vers l'avant AV) de préférence selon cet ordre d'empilage énoncé. Ainsi, l'empilage axial est inversé entre l'élément de calage 70 et le roulement 90. De ce fait :
- L'élément de calage est disposé dans le volume libre V0 du côté arrière AR, en appui contre l'élément d'entrée 3;
- Le roulement 90 est disposé dans le volume libre V0 du côté avant AV, en appui contre le couvercle 50 ;
- L'élément de calage 70 est intercalé axialement entre l'élément d'entrée 3 et l'organe de roulement 90 ;
- La portion de pré-centrage 35 entoure l'élément de calage 70, de sorte à centrer ce dernier ;
- Le roulement 90 est centré sur la portion de cylindre interne 57 du couvercle. Après mesure de la première cote C1, le roulement 90 est remplacé par l'élément de calage, ce dernier étant alors disposé contre l'élément d'entrée 3.
- La portion de cylindre interne 57 du couvercle peut servir de support conjointement à l'élément de calage 70 et au roulement 50. L'alignement axial et le centrage de telles pièces sont simplifiés.

A titre d'exemple, le roulement 90 et l'élément de calage 70 sont de même dimensions radiales LR, LC.

Tel qu'illustré sur la FIGURE6, l'élément de calage 70 présente axialement de part et d'autre:
- une première face latérale 71 située à l'arrière du module M, montée en appui contre l'élément d'entrée 3, et - une deuxième face latérale 72 opposée, située à l'avant du module M, montée en appui contre le roulement 90.

Sur la FIGURE6, le roulement 90 est maintenu par des appuis opposés 590, 790 radialement et diamétralement. Les appuis opposés 590, 790 sont formés respectivement par le couvercle 50 et l'élément de calage 70.

Ainsi, le roulement 90 peut être maintenu axialement et radialement de la manière suivante :
- Le couvercle 50 réalise un appui axial 590 sur l'extérieur du roulement 90, ici sur la bague externe 910. On maintient ainsi le diamètre extérieur DR2 du roulement 90, et notamment la face frontale arrière 91 ;
- L'élément de calage 70 réalise un appui axial 790 sur l'intérieur de l'organe de roulement 90, ici sur la bague interne 920. On maintient ainsi le diamètre intérieur DR1 du roulement 90, et notamment la face frontale avant 92 ;

On décrit maintenant plus en détails le procédé d'assemblage dite de fermeture d'un module M, illustré à la FIGURE 6. La sixième étape f) du troisième mode diffère de celle du premier mode de réalisation, en ce que :
- Selon une deuxième étape f), on positionne l'élément de calage 70 entre la face frontale arrière de l'organe de roulement et l'élément d'entrée de couple, notamment en retirant l'organe de roulement 90 préalablement disposé sur l'élément d'entrée 3 de couple. L'organe de roulement 90 est ainsi interverti avec l'élément de calage 70 ;
- Selon cette deuxième étape f), on assemble le couvercle 50 de fermeture au triple embrayage 2 en montant fixement le bord cylindrique 59 externe sur la surface d'appui axial 290 du porte-disques de sortie 20 ;
- L'élément de calage 70 est configuré de telle sorte à ajuster la position interne finale du couvercle 50 par rapport au triple embrayage 2. Le roulement 90 et l'élément de calage 70 sont guidés et centrés par la portion de cylindre interne 57 ayant une extrémité 570 de forme conique, lors de l'assemblage du couvercle 50 au triple embrayage 2 ;
- Ainsi, la première face latérale 71 arrière de l'élément de calage 70 est en appui contre l'élément d'entrée 3 ; La deuxième face latérale 72 avant de l'élément de calage est en appui contre la face frontale arrière du roulement 90 ;
- Ainsi, la face frontale avant 92 du roulement 90 est en appui contre le fond 52 du couvercle 50 de fermeture ;

L'usage du verbe « comporter », « comprendre » ou « inclure » et de ses formes conjuguées n'exclut pas la présence d'autres éléments ou d'autres étapes que ceux énoncés dans une revendication. Dans les revendications, tout signe de référence entre parenthèses ne saurait être interprété comme une limitation de revendication.

Les dimensions indiquées ou illustrées peuvent ne pas être à l'échelle et ne correspondent qu'à un modèle de limiteur de couple particulier développé par la demanderesse. On adaptera autant que de besoin le procédé de fabrication selon l'invention à d'autres diamètres nominaux du limiteur et à d'autres épaisseurs de ses composants.

## Revendications

1. Procédé d'assemblage d'un module (M) de transmission de couple, notamment d'un triple embrayage, comprenant au moins les étapes suivantes :
a) Fournir un sous-ensemble d'embrayage (2) préassemblé comprenant
- un élément d'entrée (3) de couple d'axe (X), apte à être couplé en rotation à un vilebrequin par exemple d'un moteur thermique, un premier et un deuxième éléments de sortie (6, 7) de couple, aptes à être couplés respectivement en rotation à un premier et un deuxième arbres menés (A1, A2),
- un embrayage d'entrée (E0) comprenant un ensemble multidisque empilé coopérant en partie avec un porte-disques d'entrée (10) de couple, solidaire en rotation à l'élément d'entrée (3), et en partie avec un porte-disques de sortie (20) de couple comprenant une surface d'appui axial (290),
- un premier et un deuxième embrayages de sortie (E1, E2), supportés par un moyeu principal (80) et coopérant en partie avec les éléments de sortie (6, 7) de couple, et
- un organe de roulement (90) présentant une face frontale arrière (91) positionnée en appui sur l'élément d'entrée (3) et une face frontale avant (92) opposée;
b) Mesurer une première cote (C1) représentative d'une distance axiale entre la face frontale avant (92) de l'organe de roulement (90) et la surface d'appui axial (290) du porte-disques de sortie (20) de couple ;
c) Fournir un couvercle (50) de fermeture apte à être solidaire en rotation d'une machine électrique, comprenant un fond (52) et un bord cylindrique (59) externe destiné à être monté sur la surface d'appui axial (290) du porte-disques de sortie de couple,
d) Mesurer une deuxième cote (C2) représentative d'une distance axiale entre le fond (52) du couvercle et l'extrémité externe (59) du couvercle (50) de fermeture;
e) Sélectionner un élément de calage (70) configuré pour être monté dans le fond (52) du couvercle (50), l'élément de calage (70) comportant une troisième cote (C3) dite épaisseur prédéfinie axialement entre :
- une première face latérale (71) arrière, configurée pour coopérer avec l'organe de roulement (90) ou l'élément d'entrée (3) de couple ; et
- une deuxième face latérale (72) avant, configurée pour coopérer avec le couvercle (50) ou l'organe de roulement (90) ;
l'élément de calage (70) étant sélectionné en fonction des première et deuxième cotes (C1, C2) de sorte à ajuster les positions du couvercle (50) de fermeture et du sous-ensemble d'embrayage (2) l'un par rapport à l'autre, en fonction de leurs tolérances de fabrication ;
f) Positionner l'élément de calage (70)
- dans le fond (52) du couvercle (50) de fermeture, ou
- sur la face frontale avant (92) de l'organe de roulement (90), ou
- entre la face frontale arrière de l'organe de roulement et l'élément d'entrée de couple ;
puis assembler le couvercle (50) de fermeture au sous-ensemble d'embrayage (2) en montant fixement le bord cylindrique (59) externe sur la surface d'appui axial (290) du porte-disques de sortie (20),
- l'élément de calage (70) étant configuré de telle sorte à ajuster la position interne finale du couvercle (50) par rapport au sous-ensemble d'embrayage ;
et
- la première face latérale (71) de l'élément de calage (70) étant en appui contre la face frontale avant (92) de l'organe de roulement (90) et la deuxième face latérale (72) de l'élément de calage (70) étant en appui contre le fond (52) du couvercle (50) de fermeture ;
ou
- la première face latérale (71) de l'élément de calage (70) étant en appui contre l'élément d'entrée (3) de couple ; la deuxième face latérale (72) de l'élément de calage étant en appui contre la face frontale arrière (91) de l'organe de roulement (90) et la face frontale avant (92) de l'organe de roulement (90) étant en appui contre le fond (52) du couvercle (50) de fermeture,
**caractérisé en ce que** l'embrayage d'entrée, le premier embrayage de sortie et le deuxième embrayage de sortie sont empilés et alignés radialement, et **en ce que** l'assemblage du couvercle (50) de fermeture au sous-ensemble d'embrayage (2) est réalisé par soudure.

2. Procédé d'assemblage selon la revendication 1, dans lequel
le fond (52) du couvercle (50) est délimité par une portion de cylindre interne (57) et
dans lequel, lors de l'assemblage du couvercle (50) de fermeture au sous-ensemble d'embrayage (2) :
- l'élément de calage (70) est positionné dans le fond (52) du couvercle (50) de fermeture,
l'organe de roulement (90) étant en appui contre l'élément d'entrée (3) de couple, puis l'élément de calage (70) est monté serré par ladite portion de cylindre interne (57) lors de l'assemblage du couvercle (50) de fermeture au sous-ensemble d'embrayage (2) ;
ou
- l'élément de calage (70) est positionné sur l'organe de roulement (90),
l'organe de roulement (90) étant en appui contre l'élément d'entrée (3) de couple, puis l'élément de calage (70) est guidé et centré par la portion de cylindre interne (57) ayant une extrémité (570) de forme conique ;
ou
- l'élément de calage (70) est intercalé entre l'élément d'entrée de couple et l'organe de roulement (90),
l'organe de roulement (90) étant en appui contre le couvercle (50) de fermeture,
puis l'organe de roulement (90) et l'élément de calage (70) sont guidés et centrés par la portion de cylindre interne (57) ayant une extrémité (570) de forme conique.

3. Procédé d'assemblage selon la revendication 1 ou 2, dans lequel l'élément de calage (70) est sélectionné parmi une gamme (G) d'éléments de calage (70, 70', 70", 70"') présentant plusieurs calibres ; chaque élément de calage (70, 70', 70", 70‴) étant destiné à être monté avec un couvercle (50) de fermeture, chaque élément de calage (70, 70', 70", 70"') présentant une troisième cote (C3) dite épaisseur prédéfinie représentative d'une distance axiale entre la première et la deuxième faces latérales (71, 72), l'élément de calage (70, 70', 70", 70"') de chaque calibre présentant une troisième cote (C3) différente de l'élément de calage d'un autre calibre.

4. Procédé d'assemblage selon la revendication 3, dans lequel la gamme (G) des éléments de calage (70, 70', 70", 70"') présente entre trois et dix calibres différents.

5. Procédé d'assemblage selon la revendication 3 ou 4, dans lequel les troisièmes côtes (C3) des éléments de calage (70, 70', 70", 70"') des différents calibres s'étendent sur une plage telle que la différence entre la valeur maximale de la troisième cote (C3) et la valeur minimale de la troisième cote (C3) est comprise entre 0,5 et 5 mm, par exemple de l'ordre de 1 mm.

6. Procédé d'assemblage selon l'une quelconque des revendications précédentes, dans lequel le couvercle (50) de fermeture est logé dans le porte-disques de sortie (20) selon l'étape f),
au sein d'un logement (29) interne formé sur l'extrémité libre du porte-disques de sortie (20),
le logement (29) comprenant la surface d'appui axial (290) et une portée cylindrique (191) interne sur lesquelles le bord cylindrique (55) du couvercle (50) de fermeture est monté fixement.

7. Module (M) de transmission de couple pour un engin de mobilité, comprenant :
- un sous-ensemble d'embrayage (2) préassemblé, comprenant en outre :
- un élément d'entrée (3) de couple, d'axe (X), apte à être couplé en rotation à un vilebrequin par exemple d'un moteur thermique, un premier et un deuxième éléments de sortie (6, 7) de couple, aptes à être couplés respectivement en rotation à un premier et un deuxième arbres menés (A1, A2),
- un embrayage d'entrée (E0) de type multidisque, solidaire en rotation à l'élément d'entrée (3), comprenant un porte-disques d'entrée (10) de couple et un porte-disques de sortie (20) de couple, chacun des portes-disques d'entrée et de sortie de couple comprenant un bord cylindrique (15, 25) adapté à recevoir l'ensemble multidisque de l'embrayage d'entrée, et
- un premier et un deuxième embrayages de sortie (E1, E2), supportés par un moyeu principal (80) et coopérant en partie avec les éléments de sortie (6, 7) de couple,
- un couvercle (50) de fermeture, apte à être solidaire en rotation d'une machine électrique et relié sélectivement à l'élément d'entrée (3) par l'intermédiaire de l'embrayage d'entrée (E0),
le couvercle (50) de fermeture délimitant axialement avec l'élément d'entrée (3) un volume libre (V0) à l'intérieur duquel sont disposés un organe de roulement (90) et un élément de calage (70) d'épaisseur prédéfini dit troisième cote pour l'organe de roulement,
l'élément de calage (70) étant monté serré et/ou centré avec le couvercle (50), de sorte à ajuster la position finale du couvercle (50) de fermeture par rapport au sous-ensemble d'embrayage (2),
**caractérisé en ce que** l'embrayage d'entrée (3), le premier embrayage de sortie (E1) et le deuxième embrayage de sortie (E2) sont empilés et alignés radialement,
et **en ce que** le porte-disques de sortie (20) de couple sont fixé solidairement en rotation au couvercle (50) de fermeture par soudure.

8. Module (M) de transmission de couple selon la revendication 7, dans lequel l'organe de roulement (90) est maintenu par des appuis (390, 590, 790) radialement et/ou diamétralement opposés, lesdits appuis (390, 590, 790) étant respectivement formés
par l'élément d'entrée (3) et par l'élément de calage (70), ou
par l'élément de calage (70) et par le couvercle (50).

9. Module (M) de transmission de couple selon la revendication 7 ou 8, dans lequel l'élément de calage (70) comprend :
- une troisième cote (C3) inférieure ou égale à l'épaisseur de l'organe de roulement (90), et/ou
- une dimension radiale (LC) supérieure ou égale à celle de l'organe de roulement (90), et/ou
- un diamètre intérieur (DC1) strictement inférieur au diamètre intérieur (DR1) de l'organe de roulement (90).

10. Module (M) de transmission de couple selon l'une quelconque des revendications 7 à 9, dans lequel le couvercle (50) présente un fond (52) délimité par une portion de cylindre interne (57) sur laquelle l'élément de calage (70) ou l'organe de roulement (90) est centré,
le fond (52) et la portion de cylindre interne (57) délimitant en partie le volume libre (V0).

11. Module (M) de transmission de couple selon la revendication 10, dans lequel :
- l'élément d'entrée (3) délimite une cavité (300) agencée pour recevoir l'extrémité (570) de la portion de cylindre interne (57) du couvercle et l'organe de roulement,
l'extrémité (570) de la portion de cylindre interne (57) du couvercle ayant une forme complémentaire à celle de l'intérieur de la cavité (300), par exemple de formes coniques complémentaires ; et/ou
- l'élément d'entrée (3) de couple présente une paroi d'appui (34) circonférentielle et une portion de pré-centrage (35) agencés pour recevoir l'organe de roulement (90) ou l'élément de calage (70),
la paroi d'appui (34) et la portion de pré-centrage (35) délimitant en partie le volume libre (V0),
la portion de pré-centrage (35) étant formée parmi un épaulement, une collerette et des ergots ; et/ou
- le volume libre (V0) est disposé radialement au-delà du moyeu principal (80),
par exemple radialement au-dessus d'une cavité (300) délimitée par l'élément d'entrée (3).

12. Module (M) de transmission de couple selon l'une quelconque des revendications 7 à 11, dans lequel l'organe de roulement (90) est choisi parmi un palier axial et un palier de centrage, par exemple de type roulement à billes, conique, cylindrique, ou sphérique, ou butée à aiguille.

13. Module (M) de transmission de couple selon l'une quelconque des revendications 7 à 12, dans lequel l'embrayage d'entrée (E0) comprend
le porte-disques d'entrée (10) de couple et le porte-disques de sortie (20) de couple, chacun comprenant un bord cylindrique (15, 25) adapté à recevoir l'ensemble multidisque de l'embrayage d'entrée (E0),
le porte-disques d'entrée (10) de couple étant solidaire en rotation du premier élément d'entrée (3), et
le porte-disques de sortie (20) de couple étant solidaire en rotation du couvercle (50) de fermeture,
le porte-disques de sortie (20) comprenant un logement (29), à l'intérieur duquel est monté solidairement
le couvercle (50) de fermeture, le logement (29) étant formé sur l'extrémité libre du bord cylindrique (25).

## Patentansprüche

1. Verfahren zum Zusammenbau eines Drehmomentübertragungsmoduls (M), insbesondere einer Dreifachkupplung, das mindestens die folgenden Schritte umfasst:
a) Bereitstellen einer vormontierten Kupplungsbaugruppe (2), umfassend
- ein Drehmoment-Eingangsglied (3) mit der Achse (X), das drehfest mit einer Kurbelwelle, beispielsweise eines Verbrennungsmotors, gekoppelt werden kann, ein erstes und ein zweites Drehmoment-Ausgangsglied (6, 7), die jeweils drehfest mit einer ersten und einer zweiten Abtriebswelle (A1, A2) gekoppelt werden können,
- eine Eingangskupplung (E0), die eine gestapelte Mehrscheibenanordnung umfasst, die
teilweise mit einem Eingangs-Drehmoment-Scheibenträger (10) zusammenwirkt, der drehfest mit dem Eingangsbauteil (3) verbunden ist, und
teilweise mit einem Drehmoment-Ausgangsscheibenträger (20) zusammenwirkt, der eine axiale Auflagefläche (290) aufweist,
- eine erste und eine zweite Ausgangskupplung (E1, E2), die von einer Hauptnabe (80) getragen werden und teilweise mit den Drehmoment-Ausgangselementen (6, 7) zusammenwirken, sowie
- ein Wälzkörper (90), der eine hintere Stirnfläche (91), die auf dem Eingangselement (3) aufliegt, und eine gegenüberliegende vordere Stirnfläche (92) aufweist;
b) Messen eines ersten Maßes (C1), das einen axialen Abstand zwischen der vorderen Stirnfläche (92) des Wälzkörpers (90) und der axialen Auflagefläche (290) des Ausgangsdrehmoment-Scheibenhalters (20) angibt;
c) Bereitstellen einer Verschlussabdeckung (50), die drehfest mit einer elektrischen Maschine verbunden werden kann,
der einen Boden (52) und einen äußeren zylindrischen Rand (59) umfasst, der dazu bestimmt ist, auf der axialen Auflagefläche (290) des Drehmoment-Ausgangsscheibenhalters montiert zu werden,
d) Messen eines zweiten Maßes (C2), das einen axialen Abstand zwischen dem Boden (52) der Abdeckung und dem äußeren Ende (59) der Verschlussabdeckung (50) angibt;
e) Auswählen eines Distanzstücks (70), das so ausgebildet ist, dass es in den Boden (52) des Deckels (50) eingesetzt werden kann, wobei das Distanzstück (70) ein drittes Maß (C3), die sogenannte axial vordefinierte Dicke, aufweist, die zwischen folgenden Flächen liegt:
- einer ersten hinteren Seitenfläche (71),
das so ausgebildet ist, dass es mit dem Wälzkörper (90) oder dem Drehmomenteingangsglied (3) zusammenwirkt; und
- einer zweiten vorderen Seitenfläche (72),
die so ausgebildet ist, dass sie mit dem Deckel (50) oder dem Wälzkörper (90) zusammenwirkt;
wobei das Distanzelement (70) in Abhängigkeit von dem ersten und dem zweiten Maß (C1, C2) ausgewählt wird,
ausgewählt wird, um die Positionen des Verschlussdeckels (50) und der Kupplungsbaugruppe (2) relativ zueinander entsprechend ihren Fertigungstoleranzen anzupassen;
f) Das Passstück (70) positionieren
- im Boden (52) des Verschlussdeckels (50) oder
- auf der vorderen Stirnfläche (92) des Wälzkörpers (90) oder
- zwischen der hinteren Stirnfläche des Wälzkörpers und dem Drehmomenteingangsbauteil;
anschließend die Verschlussabdeckung (50) mit der Kupplungsbaugruppe (2) zusammenbauen, indem der äußere zylindrische Rand (59) fest auf der axialen Auflagefläche (290) des Ausgangsscheibenträgers (20) montiert wird,
- wobei das Einstellelement (70) so ausgebildet ist, dass es die endgültige Innenposition des Deckels (50) relativ zur Kupplungsbaugruppe einstellt;
und
- wobei die erste Seitenfläche (71) des Distanzelements (70) an der vorderen Stirnfläche (92) des Wälzkörpers (90) anliegt und die zweite Seitenfläche (72) des Distanzelements (70) am Boden (52) des Verschlussdeckels (50) anliegt;
oder
- wobei die erste Seitenfläche (71) des Befestigungselements (70) am Drehmomenteingangsglied (3) anliegt; wobei die zweite Seitenfläche (72) des Befestigungselements an der hinteren Stirnfläche (91) des Wälzkörpers (90) anliegt und die vordere Stirnfläche (92) des Wälzkörpers (90) am Boden (52) des Verschlussdeckels (50) anliegt,
**dadurch gekennzeichnet, dass** die Eingangskupplung, die erste Ausgangskupplung und die zweite Ausgangskupplung gestapelt und radial ausgerichtet sind und dass die Verbindung des Verschlussdeckels (50) mit der Kupplungsbaugruppe (2) durch Schweißen hergestellt ist.

2. Verfahren zur Montage nach Anspruch 1, wobei
der Boden (52) des Verschlussdeckels (50) durch einen inneren Zylinderabschnitt (57) begrenzt ist und
wobei beim Zusammenbau des Verschlussdeckels (50) mit der Kupplungsbaugruppe (2):
- das Befestigungselement (70) im Boden (52) des Verschlussdeckels (50) positioniert wird,
wobei das Wälzkörperelement (90) am Drehmomenteingangsbauteil (3) anliegt, anschließend wird das Befestigungselement (70) beim Zusammenbau des Verschlussdeckels (50) mit der Kupplungsbaugruppe (2) durch den genannten inneren Zylinderabschnitt (57) festgeklemmt;
oder
- das Sicherungselement (70) auf dem Wälzkörper (90) positioniert ist,
wobei das Rollelement (90) am Drehmomenteingangsbauteil (3) anliegt, anschließend wird das Passelement (70) durch den inneren Zylinderabschnitt (57) mit einem konisch geformten Ende (570) geführt und zentriert;
oder
- das Passelement (70) zwischen dem Drehmomenteingangsbauteil und dem Laufelement (90) angeordnet wird,
wobei das Wälzkörperelement (90) am Verschlussdeckel (50) anliegt, woraufhin das Wälzkörperelement (90) und das Passelement (70) durch den inneren Zylinderabschnitt (57) mit einem konisch geformten Ende (570) geführt und zentriert werden.

3. Montageverfahren nach Anspruch 1 oder 2, bei dem das Passelement (70) aus einer Reihe (G) von Passelementen (70, 70', 70'', 70‴) mit mehreren Größen ausgewählt wird;
wobei jedes Befestigungselement (70, 70', 70'', 70‴) dazu bestimmt ist, mit einem Verschlussdeckel (50) montiert zu werden, wobei jedes Befestigungselement (70, 70', 70'', 70‴) weist ein drittes Maß (C3) auf, das als vordefinierte Dicke bezeichnet wird und einen axialen Abstand zwischen der ersten und der zweiten Seitenfläche (71, 72) angibt,
wobei das Distanzelement (70, 70', 70'', 70‴) jeder Größe ein drittes Maß (C3) aufweist, das sich von dem des Distanzelements einer anderen Größe unterscheidet.

4. Montageverfahren nach Anspruch 3, wobei die Reihe (G) der Distanzstücke (70, 70', 70'', 70‴) zwischen drei und zehn verschiedene Kaliber umfasst.

5. Montageverfahren nach Anspruch 3 oder 4, wobei sich die dritten Maße (C3) der Passelemente (70, 70', 70'', 70‴) der verschiedenen Größen sich über einen solchen Bereich erstrecken, dass die Differenz zwischen dem Maximalwert des dritten Maßes (C3) und dem Minimalwert des dritten Maßes (C3) zwischen 0,5 und 5 mm liegt, beispielsweise in der Größenordnung von 1 mm.

6. Montageverfahren gemäß einem der vorstehenden Ansprüche, bei dem der Verschlussdeckel (50) gemäß Schritt f) in den Ausgangsscheibenhalter (20) eingesetzt wird,
in einer inneren Aufnahme (29), die am freien Ende des Ausgangsscheibenträgers (20) ausgebildet ist,
wobei die Aufnahme (29) die axiale Auflagefläche (290) und eine innere zylindrische Auflagefläche (191) umfasst, auf denen der zylindrische Rand (55) des Verschlussdeckels (50) fest montiert ist.

7. Drehmomentübertragungsmodul (M) für ein Mobilitätsfahrzeug, umfassend:
- eine vormontierte Kupplungsbaugruppe (2), die ferner umfasst:
- ein Drehmoment-Eingangsglied (3) mit einer Achse (X), das drehfest mit einer Kurbelwelle, beispielsweise eines Verbrennungsmotors, gekoppelt werden kann, ein erstes und ein zweites Drehmoment-Ausgangsglied (6, 7), die jeweils drehfest mit einer ersten und einer zweiten Abtriebswelle (A1, A2) gekoppelt werden können,
- eine mit dem Eingangsdrehmomentelement (3) drehfest verbundene Mehrscheiben-Eingangs-Kupplung (E0), die einen Eingangs-Scheibenträger (10) und einen Ausgangs-Scheibenträger (20) umfasst, wobei sowohl der Drehmoment-Eingangs- als auch der Drehmoment-Ausgangsscheibenträger jeweils einen zylindrischen Rand (15, 25) aufweisen, der zur Aufnahme des Mehrscheibenpakets der Eingangskupplung ausgelegt ist, und
- eine erste und eine zweite Ausgangskupplung (E1, E2), die von einer Hauptnabe (80) getragen werden und teilweise mit den Drehmoment-Ausgangselementen (6, 7) zusammenwirken,
- einen Verschlussdeckel (50), der drehfest mit einer elektrischen Maschine verbunden werden kann und über die Eingangskupplung (E0) wahlweise mit dem Eingangselement (3) verbunden ist,
wobei der Verschlussdeckel (50) zusammen mit dem Eingangselement (3) axial einen Freiraum (V0) begrenzt, in dessen Innerem ein Wälzkörper (90) und ein Spannelement (70) mit einer vordefinierten Dicke, dem sogenannten dritten Maß, für den Wälzkörper angeordnet sind,
wobei das Distanzelement (70) fest mit dem Verschlussdeckel (50) verbunden und/oder zentriert ist, um die Endposition des Verschlussdeckels (50) relativ zur Kupplungsbaugruppe (2) einzustellen,
**dadurch gekennzeichnet, dass** die Eingangskupplung (3), die erste Ausgangskupplung (E1) und die zweite Ausgangskupplung (E2) übereinander angeordnet und radial ausgerichtet sind,
und dass der Ausgangsdrehmoment-Scheibenträger (20) durch Schweißen drehfest mit dem Verschlussdeckel (50) verbunden ist.

8. Drehmomentübertragungsmodul (M) nach Anspruch 7, wobei das Wälzkörperelement (90) durch radial und/oder diametral gegenüberliegende Stützen (390, 590, 790) gehalten wird, wobei die genannten Stützen (390, 590, 790) jeweils gebildet werden
durch das Eingangselement (3) und das Befestigungselement (70) oder
durch das Klemmelement (70) und durch den Deckel (50) gebildet werden.

9. Drehmomentübertragungsmodul (M) nach Anspruch 7 oder 8, wobei das Befestigungselement (70) umfasst:
- ein drittes Maß (C3), das kleiner oder gleich der Dicke des Wälzkörpers (90) ist, und/oder
- eine radiale Abmessung (LC), die größer oder gleich der des Wälzkörpers (90) ist, und/oder
- einen Innendurchmesser (DC1), der deutlich kleiner ist als der Innendurchmesser (DR1) des Wälzkörpers (90).

10. Drehmomentübertragungsmodul (M) gemäß einem der Ansprüche 7 bis 9, wobei der Deckel (50) einen Boden (52) aufweist, der durch einen inneren Zylinderabschnitt (57) begrenzt ist,
, auf dem das Befestigungselement (70) oder das Wälzkörperelement (90) zentriert ist,
wobei der Boden (52) und der innere Zylinderabschnitt (57) den Freiraum (V0) teilweise begrenzen.

11. Drehmomentübertragungsmodul (M) nach Anspruch 10, wobei:
- das Eingangselement (3) einen Hohlraum (300) begrenzt, der zur Aufnahme des Endes (570) des inneren Zylinderabschnitts (57) des Deckels und des Wälzkörpers ausgelegt ist,
wobei das Ende (570) des inneren Zylinderabschnitts (57) des Deckels eine zur Innenseite des Hohlraums (300) komplementäre Form aufweist, beispielsweise komplementäre konische Formen; und/oder
- das Drehmomenteinleitungselement (3) eine umlaufende Stützwand (34) und einen Vorzentrierabschnitt (35) aufweist, die zur Aufnahme des Wälzkörpers (90) oder des Keilelements (70) ausgelegt sind,
wobei die Stützwand (34) und der Vorzentrierabschnitt (35) das freie Volumen (V0) teilweise begrenzen,
wobei der Vorzentrierabschnitt (35) aus einer Schulter, einem Flansch und Nocken gebildet ist; und/oder
- der Freiraum (V0) radial jenseits der Hauptnabe (80) angeordnet ist,
beispielsweise radial oberhalb eines durch das Einlaufelement (3) begrenzten Hohlraums (300).

12. Drehmomentübertragungsmodul (M) nach einem der Ansprüche 7 bis 11, wobei das Wälzlager (90) aus einem Axiallager und einem Zentrierlager ausgewählt ist, beispielsweise vom Typ Kugellager, Kegelrollenlager, Zylinderrollenlager, Pendelkugellager oder Nadellager.

13. Drehmomentübertragungsmodul (M) nach einem der Ansprüche 7 bis 12, wobei die Eingangskupplung (E0) umfasst:
den Eingangs-Drehmoment-Scheibenträger (10) und den Ausgangs-Drehmoment-Scheibenträger (20), die jeweils einen zylindrischen Rand (15, 25) aufweisen, der zur Aufnahme des Mehrscheibenpakets der Eingangskupplung (E0) ausgelegt ist,
wobei der Drehmoment-Eingangs-Scheibenträger (10) drehfest mit dem ersten Eingangsglied (3) verbunden ist und
wobei der Ausgangsdrehmoment-Scheibenträger (20) drehfest mit dem Verschlussdeckel (50) verbunden ist,
wobei der Ausgangsdrehmoment-Scheibenträger (20) ein Gehäuse (29) umfasst, in dessen Innerem der Verschlussdeckel (50) fest montiert ist, wobei das Gehäuse (29) am freien Ende des zylindrischen Randes (25) ausgebildet ist.

## Claims

1. A method of assembling a torque transmission module (M), in particular a triple clutch, comprising at least the following steps:
a) Providing a pre-assembled clutch sub-assembly (2) comprising
- a torque input element (3) with axis (X), capable of being rotationally coupled to a crankshaft, for example of an internal combustion engine, a first and a second torque output element (6, 7), capable of being rotationally coupled respectively to a first and a second driven shaft (A1, A2),
- an input clutch (E0) comprising a stacked multi-disc assembly cooperating
in part with an input torque disc carrier (10), which is rotationally fixed to the input element (3), and
partly with a torque output disc carrier (20) comprising an axial bearing surface (290),
- a first and a second output clutch (E1, E2), supported by a main hub (80) and engaging partly with the output torque elements (6, 7), and
- a rolling element (90) having a rear end face (91) positioned in abutment against the input element (3) and an opposite front end face (92);
b) Measuring a first dimension (C1) representing an axial distance between the front face (92) of the rolling member (90) and the axial bearing surface (290) of the output torque disc holder (20);
c) Providing a closure cover (50) capable of being rotationally fixed to an electric machine,
comprising a base (52) and an outer cylindrical rim (59) designed to be mounted on the axial support surface (290) of the torque output disc holder,
d) Measuring a second dimension (C2) representing the axial distance between the base (52) of the cover and the outer edge (59) of the closure cover (50);
e) Selecting a shim (70) configured to be fitted into the base (52) of the cover (50), the shim (70) having a third dimension (C3), known as the predefined thickness, measured axially between:
- a first rear side face (71),
designed to engage with the rolling member (90) or the torque input element (3); and
- a second front side face (72),
configured to engage with the cover (50) or the rolling member (90);
the shim (70) being selected on the basis of the first and second dimensions (C1, C2)
so as to adjust the positions of the closing cover (50) and the clutch sub-assembly (2) relative to one another, in accordance with their manufacturing tolerances;
f) Position the shim (70)
- in the base (52) of the closure cover (50), or
- on the front face (92) of the rolling element (90), or
- between the rear end face of the rolling element and the torque input element;
then assemble the closure cover (50) to the clutch sub-assembly (2) by securely mounting the outer cylindrical edge (59) onto the axial bearing surface (290) of the output disc carrier (20),
- the shim (70) being configured such that it adjusts the final internal position of the cover (50) relative to the clutch sub-assembly;
and
- the first side face (71) of the shim (70) bearing against the front face (92) of the rolling element (90) and the second side face (72) of the shim (70) bearing against the base (52) of the closure cover (50);
or
- the first side face (71) of the shim (70) bearing against the torque input element (3); the second side face (72) of the shim element resting against the rear end face (91) of the rolling element (90) and the front end face (92) of the rolling element (90) resting against the base (52) of the closure cover (50),
**characterised in that** the input clutch, the first output clutch and the second output clutch are stacked and radially aligned, and **in that** the closure cover (50) is joined to the clutch sub-assembly (2) by welding.

2. A method of assembly according to claim 1, in which
the base (52) of the cover (50) is defined by an inner cylindrical portion (57) and in which, during the assembly of the closure cover (50) to the clutch sub-assembly (2):
- the shim (70) is positioned in the base (52) of the closure cover (50),
with the rolling element (90) bearing against the torque input element (3),
then the shim (70) is clamped in place by the said inner cylindrical portion (57) during the assembly of the closure cover (50) to the clutch sub-assembly (2);
or
- the shim (70) is positioned on the rolling member (90),
the rolling member (90) bearing against the torque input element (3),
whereupon the shim (70) is guided and centred by the inner cylindrical portion (57) having a conical end (570);
or
- the shim (70) is interposed between the torque input element and the rolling member (90),
the rolling element (90) bearing against the closure cover (50),
whereupon the rolling member (90) and the shim (70) are guided and centred by the inner cylindrical portion (57) having a conical end (570).

3. A method of assembly according to claim 1 or 2, wherein the shim (70) is selected from a range (G) of shims (70, 70', 70'', 70‴) having a variety of sizes;
each spacer element (70, 70', 70'', 70‴) is designed to be fitted with a closure lid (50), each spacer element (70, 70', 70'', 70‴) having a third dimension (C3), known as a predefined thickness, representing an axial distance between the first and second side faces (71, 72),
the spacer element (70, 70', 70'', 70‴) of each size having a third dimension (C3) that differs from that of the spacer element of another size.

4. A method of assembly according to claim 3, in which the range (G) of shims (70, 70', 70'', 70‴) comprises between three and ten different gauges.

5. A method of assembly according to claim 3 or 4, wherein the third dimensions (C3) of the shims (70, 70', 70'', 70‴) of the different sizes extend over a range such that the difference between the maximum value of the third dimension (C3) and the minimum value of the third dimension (C3) is between 0.5 and 5 mm, for example of the order of 1 mm.

6. A method of assembly according to any one of the preceding claims, in which the closing cover (50) is housed in the output disc holder (20) in accordance with step f),
within an internal recess (29) formed on the free end of the output disc holder (20),
the recess (29) comprising the axial bearing surface (290) and an internal cylindrical bearing surface (191) on which the cylindrical edge (55) of the closure cover (50) is fixedly mounted.

7. Torque transmission module (M) for a mobility vehicle, comprising:
- a pre-assembled clutch sub-assembly (2), further comprising:
- a torque input element (3), having an axis (X), capable of being rotationally coupled to a crankshaft, for example of an internal combustion engine, a first and a second torque output element (6, 7), capable of being rotationally coupled respectively to a first and a second driven shaft (A1, A2),
- a multi-disc input clutch (E0), rotationally integral with the input element (3), comprising an input torque disc carrier (10) and an output torque disc carrier (20), each of the input and output torque disc carriers comprising a cylindrical rim (15, 25) adapted to receive the multi-disc assembly of the input clutch, and
- a first and a second output clutch (E1, E2), supported by a main hub (80) and cooperating in part with the output torque elements (6, 7),
- a closure cover (50), capable of being rotationally fixed to an electric machine and selectively connected to the input element (3) via the input clutch (E0),
the closure cover (50) defining, axially with the input element (3), a free volume (V0) within which are arranged a rolling element (90) and a shim (70) of a predefined thickness, known as the 'third dimension', for the rolling element,
the shim (70) being fitted in a clamped and/or centred manner with the cover (50), so as to adjust the final position of the cover (50) relative to the clutch sub-assembly (2),
**characterised in that** the input clutch (3), the first output clutch (E1) and the second output clutch (E2) are stacked and radially aligned,
and **in that** the output torque disc carrier (20) is fixed in a rotationally integral manner to the closure cover (50) by welding.

8. Torque transmission module (M) according to claim 7, in which the rolling element (90) is held by radially and/or diametrically opposed supports (390, 590, 790), said supports (390, 590, 790) being formed respectively
by the input element (3) and the locking element (70), or
by the locking element (70) and by the cover (50).

9. A torque transmission module (M) according to claim 7 or 8, in which the locking element (70) comprises:
- a third dimension (C3) less than or equal to the thickness of the rolling element (90), and/or
- a radial dimension (LC) greater than or equal to that of the rolling element (90), and/or
- an internal diameter (DC1) strictly less than the internal diameter (DR1) of the rolling element (90).

10. A torque transmission module (M) according to any one of claims 7 to 9, in which the cover (50) has a base (52) defined by an inner cylindrical portion (57)
on which the shim (70) or the rolling element (90) is centred,
the base (52) and the inner cylindrical portion (57) partially defining the free volume (V0).

11. Torque transmission module (M) according to claim 10, in which:
- the input element (3) defines a cavity (300) arranged to receive the end (570) of the inner cylinder portion (57) of the cover and the rolling member,
the end (570) of the inner cylinder portion (57) of the cover having a shape complementary to that of the interior of the cavity (300), for example complementary conical shapes; and/or
- the torque input element (3) comprises a circumferential support wall (34) and a pre-centring portion (35) arranged to receive the rolling element (90) or the shim (70),
the support wall (34) and the pre-centring portion (35) partially defining the free volume (V0),
the pre-centring portion (35) being formed as one of a shoulder, a flange and lugs; and/or
- the free volume (V0) is situated radially beyond the main hub (80),
for example, radially above a cavity (300) defined by the input element (3).

12. A torque transmission module (M) according to any one of claims 7 to 11, in which the rolling element (90) is selected from an axial bearing and a centring bearing, for example of the ball bearing, tapered, cylindrical or spherical type, or a needle roller thrust bearing.

13. A torque transmission module (M) according to any one of claims 7 to 12, in which the input clutch (E0) comprises
the input torque disc carrier (10) and the output torque disc carrier (20), each comprising a cylindrical rim (15, 25) adapted to receive the multi-disc assembly of the input clutch (E0),
the input torque disc carrier (10) being rotationally fixed to the first input element (3), and
the output torque disc carrier (20) being rotationally fixed to the closure cover (50),
the output torque disc carrier (20) comprising a housing (29), inside which the closure cover (50) is fixedly mounted, the housing (29) being formed on the free end of the cylindrical rim (25).
